(19) Europäisches Patentamt / European Patent Office / Office européen des brevets

(11) EP 4 546 017 A1

(12) **EUROPEAN PATENT APPLICATION**
published in accordance with Art. 153(4) EPC

(43) Date of publication:
**30.04.2025 Bulletin 2025/18**

(21) Application number: **23826907.0**

(22) Date of filing: **26.05.2023**

(51) International Patent Classification (IPC):
***G02B 5/30*** (2006.01) ***B05D 1/26*** (2006.01)
***B05D 3/02*** (2006.01) ***B05D 3/06*** (2006.01)
***B05D 7/24*** (2006.01) ***B41J 2/01*** (2006.01)
***B41M 3/00*** (2006.01) ***B41M 5/00*** (2006.01)
***B44C 1/17*** (2006.01) ***C09D 11/101*** (2014.01)
***C09D 11/30*** (2014.01) ***C09D 11/38*** (2014.01)
***G02B 5/26*** (2006.01) ***G02B 5/28*** (2006.01)

(52) Cooperative Patent Classification (CPC):
**B05D 1/26; B05D 3/02; B05D 3/06; B05D 7/24; B41J 2/01; B41M 3/00; B41M 5/00; B44C 1/17; C09D 11/101; C09D 11/30; C09D 11/38; G02B 5/26; G02B 5/28; G02B 5/30**

(86) International application number:
**PCT/JP2023/019818**

(87) International publication number:
**WO 2023/248719 (28.12.2023 Gazette 2023/52)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **21.06.2022 JP 2022099947**
**06.03.2023 JP 2023034111**

(71) Applicant: **FUJIFILM Corporation**
**Tokyo 106-8620 (JP)**

(72) Inventors:
- **SASADA, Misato**
  **Ashigarakami-gun, Kanagawa 258-8577 (JP)**
- **INADA, Hiroshi**
  **Ashigarakami-gun, Kanagawa 258-8577 (JP)**

(74) Representative: **Klunker IP**
**Patentanwälte PartG mbB**
**Destouchesstraße 68**
**80796 München (DE)**

(54) **IMAGE RECORDING MATERIAL, METHOD FOR PRODUCING IMAGE RECORDING MATERIAL, AND DECORATED MOLDED OBJECT**

(57) Provided are an image recorded material including a substrate and an ink jet image disposed on the substrate, in which the ink jet image includes a cholesteric liquid crystal layer, the cholesteric liquid crystal layer has a stripe pattern of a bright portion and a dark portion observed with a scanning electron microscope in a cross section along a thickness direction of the ink jet image, and at least a part of a line indicating the bright portion or the dark portion is a wavy line; and applications thereof.

FIG. 1

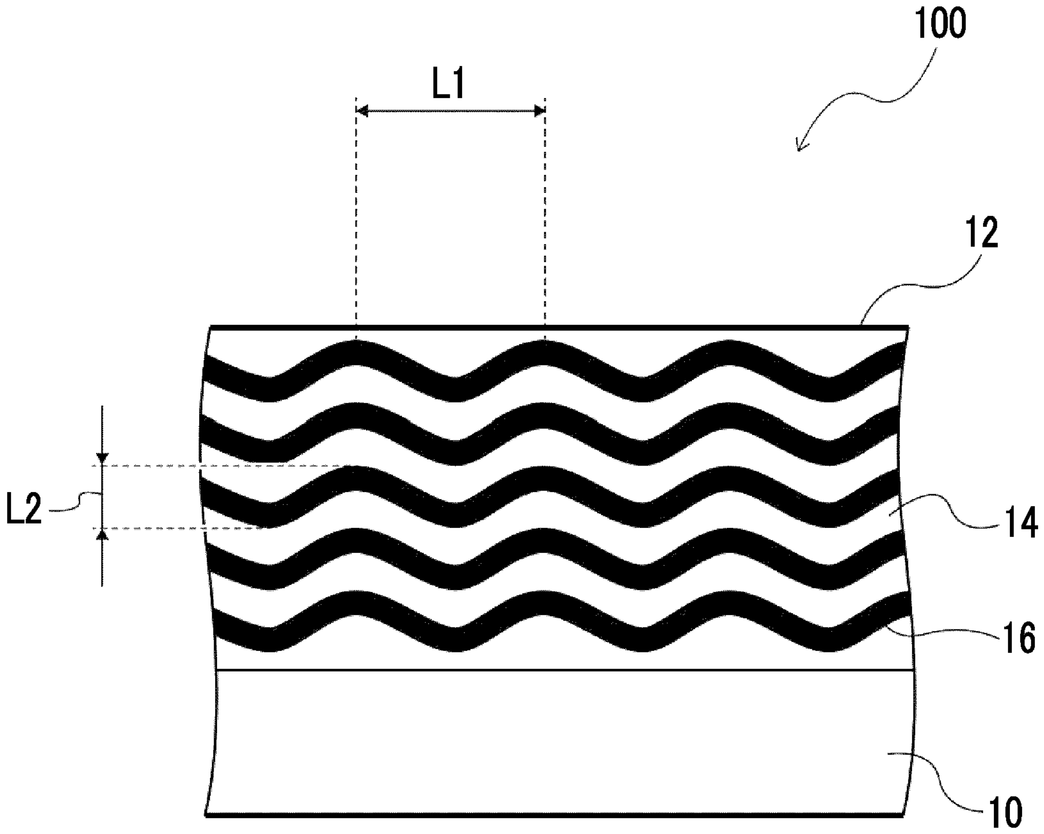

## Description

BACKGROUND OF THE INVENTION

1. Field of the Invention

The present disclosure relates to an image recorded material, a manufacturing method of an image recorded material, and a decorative molded body.

2. Description of the Related Art

In recent years, an image recording method using an ink containing a liquid crystal compound has been proposed. Cholesteric liquid crystals prepared by adding a chiral agent to the liquid crystal compound have unique light reflectivity and have characteristics in that tone changes depending on the viewing angle. In a case where the ink containing a liquid crystal compound is used, a special image which is not found in other image recording materials can be recorded, so that it is expected to be applied to a member for building materials, such as a glass decorative film, special decoration on an article, such as a packaging material, and security printing.

For example, JP2016-114661A discloses a manufacturing method of an optical member, including forming dots consisting of a liquid crystal material having a cholesteric structure on a surface of a substrate, in which the formation of the dots includes applying a liquid crystal composition containing a liquid crystal compound and a chiral agent onto the substrate, and the application is performed twice or more per one dot. WO2020/194831A discloses an ink set for ink jet recording, including a base ink containing at least one polymerizable compound selected from the group consisting of a monofunctional polymerizable compound and a difunctional polymerizable compound, and an image recording ink containing a polymerizable liquid crystal compound and a chiral compound.

SUMMARY OF THE INVENTION

However, in some cases, it is required to obtain an image in which both favorable color developability and stereoscopic effect are achieved by using the ink containing a liquid crystal compound.

The present disclosure has been made in view of such circumstances, and an object of an embodiment of the present invention is to provide an image recorded material having excellent color developability and having an image with a stereoscopic effect, a manufacturing method of an image recorded material, and a decorative molded body.

The present disclosure includes the following aspects.

<1> An image recorded material comprising:

a substrate; and
an ink jet image disposed on the substrate,
in which the ink jet image includes a cholesteric liquid crystal layer,
the cholesteric liquid crystal layer has a stripe pattern of a bright portion and a dark portion observed with a scanning electron microscope in a cross section along a thickness direction of the ink jet image, and
at least a part of a line indicating the bright portion or the dark portion is a wavy line.

<2> The image recorded material according to <1>,
in which a wave period length of the line indicating the bright portion or the dark portion is 5 μm to 125 μm.
<3> The image recorded material according to <1> or <2>,
in which, in the line indicating the bright portion or the dark portion, a maximum value of an amplitude in a direction perpendicular to an imaginary straight line of the line indicating the bright portion or the dark portion is 100 nm to 1000 nm.
<4> The image recorded material according to any one of <1> to <3>,
in which, in a case where an angle between an imaginary straight line of the line indicating the bright portion or the dark portion and a main surface of the substrate is defined as an alignment angle, the cholesteric liquid crystal layer includes a region where the alignment angle is 5° or more.
<5> The image recorded material according to any one of <1> to <4>,
in which the image recorded material is a decorative sheet.
<6> The image recorded material according to any one of <1> to <5>,
in which a base layer is disposed between the substrate and the ink jet image.
<7> A manufacturing method of an image recorded material, comprising:

a step of preparing an ink containing a solvent having a boiling point of 100°C or higher and lower than 300°C, a polymerizable liquid crystal compound, a chiral compound, a polymerization initiator, and a surfactant;
a step of heating a substrate to 45°C or higher;
a step of applying the ink onto the heated substrate by an ink jet recording method;
a step of heating the applied ink; and
a step of irradiating the applied ink with an active energy ray.

<8> The manufacturing method of an image recorded material according to <7>,

in which, in the step of preparing the ink, two or more kinds of inks are prepared,
in the step of applying the ink, a mixed region where the two or more kinds of inks are mixed with each other by the application is formed on at least a part of the substrate, and
in a case where the two or more kinds of inks are each formed into an ink film, a color difference between two ink films is 25 or more.

<9> The manufacturing method of an image recorded material according to <7> or <8>,
in which, in the step of applying the ink, the ink is applied by a multi-pass method.
<10> The manufacturing method of an image recorded material according to any one of <7> to <9>,

in which the active energy ray is radiated using a mercury lamp, and
a content of the polymerization initiator is 6 parts by mass to 15 parts by mass with respect to 100 parts by mass of the polymerizable liquid crystal compound.

<11> A decorative molded body comprising:
a molded product of the image recorded material according to <5>.

According to the embodiment of the present invention, an image recorded material having excellent color developability and having an image with a stereoscopic effect, a manufacturing method of an image recorded material, and a decorative molded body are provided.

BRIEF DESCRIPTION OF THE DRAWINGS

Fig. 1 is a schematic view showing a stripe pattern of a bright portion 14 and a dark portion 16 observed with SEM in a cross section of an image recorded material 100 in which an ink jet image 12 is disposed on a substrate 10.
Fig. 2 is a schematic view showing a stripe pattern of a bright portion 24 and a dark portion 26 observed with SEM in a cross section of an image recorded material 200 in which an ink jet image 22 is disposed on a substrate 20, and is a view for describing an alignment angle.

DESCRIPTION OF THE PREFERRED EMBODIMENTS

Hereinafter, an image recorded material and a manufacturing method of an image recorded material according to the present disclosure will be described in detail.
In the present specification, the numerical ranges shown using "to" means ranges including the numerical values described before and after "to" as the minimum value and the maximum value.
In a numerical range described in a stepwise manner in the present specification, an upper limit value or a lower limit value described in a certain numerical range may be replaced with an upper limit value or a lower limit value in another numerical range described in a stepwise manner. In addition, in a numerical range described in the present specification, an upper limit or a lower limit described in a certain numerical range may be replaced with a value described in Examples.
In the present specification, in a case in which a plurality of substances corresponding to respective components in a composition are present, the amount of the respective components in the composition means the total amount of the plurality of substances present in the composition unless otherwise specified.
In addition, in the present specification, a combination of two or more preferred aspects is a more preferred aspect.
Furthermore, in the present specification, the meaning of the term "step" includes not only an independent step but also a step whose intended purpose is achieved even in a case in which the step is not clearly distinguished from other steps.

In the present specification, "(meth)acrylate" means acrylate or methacrylate.
In the present specification, "image" means general films, and "image recording" means formation of the image (that is, the film). In addition, the concept of "image" in the present specification also includes a solid image.

[Image recorded material]

The image recorded material according to the present disclosure includes a substrate and an ink jet image recorded on the substrate, in which the ink jet image includes a cholesteric liquid crystal layer, the cholesteric liquid crystal layer has a stripe pattern of a bright portion and a dark portion observed with a scanning electron microscope (hereinafter, referred to as "SEM") in a cross section along a thickness direction of the ink jet image, and at least a part of a line indicating the bright portion or the dark portion is a wavy line.
The image recorded material according to the present disclosure has excellent color developability and has an image having a stereoscopic effect. The reason why such an image is obtained is not clear, but the present inventors have presumed as follows.
In the image recorded material according to the present disclosure, in the stripe pattern of the bright portions and the dark portions observed with SEM in the cross section of the image, since the line indicating the bright portion or the dark portion is a wavy line, in a case where light is incident from a normal direction of the image, a part of the incident light is reflected in a direction (oblique direction) at an angle $\theta$ (< 90°) with respect to the normal direction. In a case where the light is reflected not only in the normal direction but also in the oblique direction, visibility from the oblique direction is improved, and the color developability is excellent. In addition, since the incident light is reflected in various directions, brightness is locally changed, so that the stereoscopic effect of the image is obtained.
On the other hand, JP2016-114661A discloses that the image recording ink is applied in a dot shape, but there is no disclosure focusing on the color developability and the stereoscopic effect.
In addition, WO2020/194831A discloses the color developability, but does not disclose a disclosure focusing on the stereoscopic effect.
In addition, in the method disclosed in JP2016-114661A, a reflective layer is formed parallel to an ink film. Therefore, even in a case where a uniform image is recorded in order to increase color density, it is difficult to form a wavy reflecting surface or an inclined reflecting surface. In a case where the reflective layer is flat with respect to the ink film, a specular reflection component is dominant and a diffuse reflection component is small. In a case of such reflection characteristics, glossiness and color are strongly felt in a case of being viewed from a direction of specular reflection, but vividness is lacking in a case of being viewed from another direction.
Hereinafter, each configuration of the image recorded material according to the present disclosure will be described in detail.

<Substrate>

The image recorded material according to the present disclosure includes a substrate.
The substrate is not particularly limited, and any substrate can be selected. The substrate may be any of an ink-absorbing substrate, a substrate having low ink absorbency, and a non-ink-absorbing substrate. Examples of the substrate include paper, leather, fabric, and a resin. Among these, as the substrate, from the viewpoint of color developability, a non-ink-absorbing substrate is preferable, and a resin substrate is more preferable.
Examples of a resin constituting the resin substrate include cellulose diacetate, cellulose triacetate, cellulose propionate, cellulose butyrate, cellulose acetate butyrate, cellulose nitrate, an acrylic resin, a chlorinated polyolefin resin, a polyether sulfone resin, polyethylene terephthalate (PET), polyethylene naphthalate, nylon, polyethylene, polystyrene, polypropylene, a polycycloolefin resin, polyvinyl chloride, polyamide, polyimide, polycarbonate, polyethersulfone, polyetheretherketone, polyvinyl acetal, and polyurethane. The resin substrate may be a substrate containing only one of these resins, or may be a substrate prepared by mixing two or more resins among the above. **In** addition, other layers such as an easy adhesion layer, an antistatic layer, and an antifouling layer may be formed on these resins, or a surface of the substrate may be subjected to a hydrophilic treatment. **In** addition, the substrate may include a pressure-sensitive adhesive layer or a protective layer, and a coating layer such as an ink receiving layer and an easy adhesion layer may be provided.
Among these, the substrate preferably contains polyethylene terephthalate (PET).
The substrate may contain various additives such as an ultraviolet (UV) absorber, matting fine particles, a plasticizer, a deterioration inhibitor, and a release agent.
The substrate may be transparent or may be colored. In a case where the image recorded material is visually recognized from an opposite side of an image recording surface, a substrate having a transmittance of visible light of 60% or more is preferable. The transmittance is more preferably 80% or more, and still more preferably 90% or more. The substrate may be translucent, and one side thereof may be subjected to a mat treatment.

In addition, the substrate preferably has low birefringence in a visible light region. For example, a phase difference of the substrate at a wavelength of 550 nm is preferably 50 nm or less, and more preferably 20 nm or less.

In the image recorded material according to the present disclosure, in a case where an orientation restriction force on the liquid crystal from the substrate is strong, diffuse reflectivity is decreased. Therefore, it is preferable to use a substrate which has not been subjected to a surface treatment such as a corona treatment and a rubbing treatment.

A thickness of the substrate is not particularly limited, and is, for example, 1 μm to 10 mm. From the viewpoint of thinning and handleability, the thickness of the substrate is preferably 10 μm to 200 μm and more preferably 20 μm to 200 μm.

The thickness means an average thickness, and is obtained by measuring thicknesses at any 5 points on the substrate and arithmetically averaging these values.

<Inkjet image>

The image recorded material according to the present disclosure includes an ink jet image disposed on the substrate.

In the image recorded material according to the present disclosure, the ink jet image may be provided directly on the substrate, or another layer may be provided between the substrate and the ink jet image.

Examples of other layers include an ink receiving layer, an easy adhesion layer, a base layer or an overcoat layer formed of a clear ink, and a printing layer formed of a color ink. Details of the other layers will be described later.

In the present disclosure, the ink jet image means an image recorded by an ink jet recording method. Whether or not an image is the ink jet image can be determined by observing a surface of the image (ink film) with an optical microscope. In the ink jet image, dots peculiar to the ink jet recording method can be confirmed.

The ink jet image has higher diffuse reflectivity, higher color developability, and a stereoscopic effect as compared with an image formed by a coating method.

In the present disclosure, the ink jet image includes a cholesteric liquid crystal layer, the cholesteric liquid crystal layer has a stripe pattern of a bright portion and a dark portion observed with SEM in a cross section along a thickness direction of the image, and a line indicating the bright portion or the dark portion is a wavy line.

In this case, a bright portion or a dark portion, which is not the wavy line, may be included in a part of the region, and the stripe pattern may not be formed in a part of the region.

The cholesteric liquid crystal layer refers to a layer including at least a cholesteric liquid crystalline phase. The cholesteric liquid crystalline phase means a phase in which liquid crystal molecules are helically aligned. In a case of the cholesteric liquid crystal layer, a stripe pattern of a bright portion and a dark portion is observed by the SEM.

The stripe pattern of the bright portion and the dark portion, observed by the SEM, can be confirmed, for example, by the following method.

The image is cut in a thickness direction of the image to obtain a cross-sectional sample. In a case where a cross-sectional SEM image is observed with a scanning electron microscope (acceleration voltage: 2 kV, observation magnification: 5,000 times and 10,000 times), it can be confirmed that there is a striped pattern of shading.

In the present disclosure, in the striped pattern of shading, a portion which is observed to be black and has a high color density is referred to as the dark portion, and a portion which is observed to be white and has a low color density is referred to as the bright portion.

In the cross-sectional SEM image, one period of the bright portion and the dark portion corresponds to 180 degrees of a helix of the liquid crystal. Therefore, two periods of the bright portion and the dark portion correspond to 360 degrees of the helix of the liquid crystal. That is, a width of the two periods of the bright portion and the dark portion corresponds to a length of a helical pitch in the cholesteric liquid crystal layer.

In addition, a normal direction of the line indicating the bright portion or the dark portion means a direction of a helical axis in the cholesteric liquid crystal layer.

In the present disclosure, the line indicating the bright portion or the dark portion is a wavy line. The wavy line means a line which is wavy and undulating, as opposed to a straight line.

The wave constituting the wavy line may or may not be periodic. The wavy line may be a line having a shape with an amplitude which is periodic in a gravity direction and an anti-gravity direction, with respect to a horizontal direction.

For example, the wavy line can be formed by maintaining wettability of the substrate and the ink in an appropriate range, and suppressing wetting spread of the ink. In addition, the shape (period length, amplitude, and the like) of the wavy line can be controlled by the amount of the surfactant and a horizontal alignment agent contained in the ink and a drying rate after the application of the ink. The drying rate can be controlled by the boiling point of the solvent contained in the ink, the content of the solvent, the heating temperature of the substrate during the image recording, the application amount of the ink, the printing speed, and the like.

Fig. 1 is a schematic view showing a stripe pattern of a bright portion 14 and a dark portion 16 observed with SEM in a cross section of an image recorded material 100 in which an ink jet image 12 is disposed on a substrate 10.

As shown in Fig. 1, the image recorded material 100 includes the substrate 10 and the ink jet image 12 disposed on the substrate 10.

As shown in Fig. 1, in the cross section of the image recorded material 100, both a line 14 indicating the bright portion and a line 16 indicating the dark portion are wavy lines.

In the line (wavy line) indicating the bright portion or the dark portion, a wave period length L1 is preferably 5 μm to 125 μm, more preferably 5 μm to 80 μm, and still more preferably 10 μm to 80 μm. In a case where the wave period length L1 is within the above-described range, the diffuse reflectivity is high, the color developability is excellent, and an image with a more stereoscopic effect can be obtained.

For example, in a case where the line indicating the bright portion or the dark portion is formed substantially horizontally and flatly with respect to a surface layer of the substrate or the ink film and a proportion of the wavy line is small, a ratio of reflectivity of a diffuse reflection component to reflectivity of a total reflection component in the ink film is 15% or less. In this case, high lustrousness is exhibited at a specific observation angle, but colors are not perceived as vivid at other angles. On the other hand, in a case where the line indicating the bright portion or the dark portion is a wavy line, the diffuse reflection component is 50% or more, and colors are perceived as vivid at various observation angles. In particular, in a case where the diffuse reflection component is 80% or more, the visibility is high regardless of the observation angle, which is preferable for decoration.

The wave period length L1 means a length of single period of the wave. The single period means a distance between adjacent convex portions in the wavy line.

The wave period length L1 is measured by the following method.

First, an imaginary straight line of the line indicating the bright portion or the dark portion is drawn. The imaginary straight line of the line indicating the bright portion or the dark portion is obtained by approximating the wavy line as a straight line. It is calculated depending on how many wave periods are included in a range of a width of 500 μm in the imaginary straight line of the wavy line.

In the line (wavy line) indicating the bright portion or the dark portion, a maximum value L2 of an amplitude in a direction perpendicular to the imaginary straight line of the line indicating the bright portion or the dark portion is preferably 20 nm to 3,000 nm, more preferably 50 nm to 1,000 nm, still more preferably 100 nm to 1,000 nm, and particularly preferably 100 nm to 500 nm. In a case where the maximum value L2 of the amplitude is within the above-described range, the diffuse reflectivity is high, the color developability is excellent, and an image with a more stereoscopic effect can be obtained.

The maximum value L2 of the amplitude means a sum of a distance from the imaginary straight line to a maximum displacement in one direction and a distance from the imaginary straight line to a minimum displacement in the other direction, with the imaginary straight line as a center.

The maximum value L2 of the amplitude is measured by the following method.

First, an imaginary straight line of the wavy line is drawn. A direction perpendicular to the imaginary straight line of the wavy line is defined as an amplitude direction. A distance between a convex portion and a concave portion in the wavy line is measured along the above-described amplitude direction.

The line indicating the bright portion or the dark portion may be a continuous line, or may include a discontinuous portion. In a case where the line indicating the bright portion or the dark portion is continuous, haze of the image is low, and transparency is excellent. In a case where the discontinuous portion is included, the haze increases, and the image appears cloudy.

In a width of 500 μm in a direction parallel to the imaginary straight line of the wavy line, the number of discontinuous portions is preferably 20 or less, more preferably 10 or less, and particularly preferably 0.

In the image recorded material according to the present disclosure, it is preferable that, in a case where an angle between the imaginary straight line of the line (wavy line) indicating the bright portion or the dark portion and a main surface of the substrate is defined as an alignment angle, the cholesteric liquid crystal layer includes a region where the alignment angle is 5° or more.

The main surface of the substrate refers to a surface of the substrate, having the largest area.

A method of measuring the alignment angle will be described with reference to Fig. 2.

Fig. 2 is a schematic view showing a stripe pattern of a bright portion 24 and a dark portion 26 observed with SEM in a cross section of an image recorded material 200 in which an ink jet image 22 is disposed on a substrate 20, and is a view for describing the alignment angle.

As shown in Fig. 2, the image recorded material 200 includes a substrate 20 and an ink jet image 22 disposed on the substrate 20.

For example, as shown in Fig. 2, an imaginary straight line 24A is drawn on a line 24 indicating the bright portion. As the alignment angle, an angle θ1 between a main surface 21 of the substrate and the imaginary straight line 24A is measured.

In Fig. 2, the imaginary straight line 24A is upwardly inclined (that is, has a positive inclination in X-Y coordinates). The alignment angle is represented by a plus in a case where the imaginary straight line is upwardly inclined (that is, has a

positive inclination in the X-Y coordinates), and is also represented by a plus in a case where the imaginary straight line is downwardly inclined (that is, has a negative inclination in the X-Y coordinates).

In the region where the alignment angle is 5° or more, the reflectivity and the reflection wavelength are different from those in the region where the alignment angle is 0°, at the same light source and the same observation angle. Therefore, the image appears to have a shadow, a highlight, or the like, and the stereoscopic effect is obtained. In addition, in two regions where the alignment angle is 5° or more and the regions are positioned adjacent to each other, even in a case where one alignment angle is a positive inclination and the other alignment angle is a negative inclination, the same effect of interchanging the shadow and the highlight in a case where the observation angle is changed is obtained, and thus the stereoscopic effect is obtained.

The presence or absence of the difference in the alignment angle can be detected by colorimetry with a multi-angle colorimeter. Even in a case where an image is recorded with the same ink, a color difference ΔEab is large in a portion which appears to have a different color and a portion where lightness and darkness are significantly changed. For example, in a case where color difference values at 45° are compared using a multi-angle color measurement device such as CM-M6 (manufactured by Konica Minolta, Inc.), a difference in color can be clearly detected even during visual observation in a case where the color difference is 25 or more. In particular, in the image including the region where the alignment angle is 5° or more, the region where the alignment angle is 0° and the region where the alignment angle is 5° or more, in which the inclinations are opposite to each other, have a feature that the color difference at light-receiving angles of 25° and 45° is large.

Furthermore, the inclination of the imaginary straight line (that is, the positive inclination or the negative inclination) is determined by the type of the chiral compound. The inclination is positive or negative depending on whether helical twisting power induced by the chiral compound contained in the ink is right-handed or left-handed.

That is, in the same image, a tilt direction is determined depending on whether the helical twisting power of the chiral compound contained in the ink is in right-handed or left-handed. The observation angle at which the reflection of light is increased by a chiral compound having a right-handed helical twisting power is dark in the image recorded material obtained by using a chiral compound having a left-handed helical twisting power, and the opposite phenomenon also occurs.

The alignment angle is preferably 5° to 45°, more preferably 10° to 30°, and most preferably 10° to 20°.

In a case where the alignment angle is in an appropriate range, the brightness in a case of viewing the entire image recording surface is maintained in a preferred range, and high designability is obtained.

The image recorded material according to the present disclosure has excellent color developability and has an image with a stereoscopic effect, and thus can be suitably used as a decorative sheet.

The image recorded material according to the present disclosure may further include a transparent or opaque substrate on the ink jet image. The image recorded material according to the present disclosure may be used by being bonded to a laminated film, or may be used by being bonded to a laminated film containing a UV cut agent. A pressure-sensitive adhesive layer may be provided between the ink jet image and the transparent or opaque substrate. In addition, the image recorded material according to the present disclosure may be combined with a color image, an undercoat layer, and an overcoat layer, or may be transferred to another substrate after printing. Furthermore, the image recorded material according to the present disclosure may be attached to glass, transferred after printing, or used in combination with a polarizing plate.

In the image recorded material according to the present disclosure, it is preferable that a base layer is disposed between the substrate and the ink jet image.

Examples of the base layer include a layer for improving the color developability of the ink jet image, and a functional layer such as an easy adhesion layer.

The base layer preferably contains at least one binder. The base layer may contain, in addition to the binder, for example, a crosslinking agent, a matting agent, a surfactant, or the like.

Examples of the binder include a polyester resin, a polyurethane resin, a polyester-based polyurethane, an acrylic resin, a polyolefin, and polyvinyl alcohol.

It is preferable that the functional layer such as an easy adhesion layer contains at least one kind of particles. As the particles, particles of silica, calcium carbonate, magnesium oxide, magnesium carbonate, tin oxide, or the like are suitable. Among these, from the viewpoint of a small decrease in adhesiveness in a moist heat atmosphere, particles of tin oxide or silica are preferable.

An average particle diameter of the particles is preferably 10 nm to 700 nm, more preferably 20 nm to 300 nm, and still more preferably 20 nm to 100 nm. By using particles having an average particle diameter within the above-described range, favorable easy adhesiveness can be obtained. The shape of the particles is not particularly limited, and may be any of a spherical shape, an amorphous shape, or a needle shape.

Examples of a method of forming the base layer on the substrate include a method of bonding a polymer sheet having easy adhesiveness to the substrate, and a method of applying a composition for forming the base layer and drying the composition.

The coating method is not particularly limited, and for example, a known method such as a gravure coater or a bar coater can be used.

A thickness of the base layer is not particularly limited, but in a case where the thickness is 0.01 μm to 8 μm, the surface condition can be further improved.

In addition, the base layer preferably has transparency.

The base layer preferably contains at least one binder resin selected from a polyester resin, a polyurethane resin, or an acrylic resin, and at least one crosslinking agent of an oxazoline compound or a carbodiimide compound. In addition, the base layer may contain other components as necessary.

Examples of the polyester resin include polyhydroxybutyrate (PHB), polycaprolactone (PCL), polycaprolactone butylene succinate, polybutylene succinate (PBS), polybutylene succinate adipate (PBSA), polybutylene succinate carbonate, polyethylene terephthalate succinate, polybutylene adipate terephthalate, polytetramethylene adipate terephthalate, polybutylene adipate terephthalate, polyethylene succinate (PES), polyglycolic acid (PGA), polylactic acid (PLA), a carbonate copolymer of an aliphatic polyester, and a copolymer of an aliphatic polyester and a polyamide.

The polyester resin may be a commercially available product.

Examples of the commercially available product include FINETEX ES650 and ES2200 (manufactured by DIC Corporation); VYLONAL MD1245, MD1400, and MD1480 (manufactured by Toyobo Co., Ltd.); PESRESIN A-110, A-124GP, A-520, and A-640 (manufactured by Takamatsu Oil & Fat Co., Ltd.); and PLASCOAT Z561, Z730, Z687, and Z592 (manufactured by GOO CHEMICAL CO., LTD.).

The polyurethane resin is a generic term for a polymer having a urethane bond in a main chain, and is usually obtained by a reaction of polyisocyanate and polyol.

Examples of the polyisocyanate include toluene diisocyanate (TDI), diphenylmethane diisocyanate (MDI), naphthalene diisocyanate (NDI), triazine diisocyanate (TODI), hexamethylene diisocyanate (HDI), and isophorone diisocyanate (IPDI).

Examples of the polyol include ethylene glycol, propylene glycol, glycerin, and hexanetriol.

In addition, the polyurethane resin may be a polymer obtained by performing a chain extension treatment on a urethane polymer which is obtained by a reaction between the polyisocyanate and the polyol to increase the molecular weight.

The polyisocyanate, the polyol, and the chain extension treatment are described in, for example, "Polyurethane Handbook" (edited by Keiji Iwata, published by Nikkan Kogyo Shimbun, Ltd., 1987).

The polyurethane resin may be a commercially available product.

Examples of the commercially available product include SUPERFLEX 470, 210, 150HS, and ELASTRON H-3 (manufactured by DKS Co., Ltd.); HYDRAN AP-20, AP-40F, and WLS-210 (manufactured by DIC Corporation); and TAKELAC W-6061 and OLESTER UD-350 (manufactured by Mitsui Chemicals, Inc.).

Among these, the polyurethane resin is preferable as the binder resin.

The acrylic resin means a resin having a constitutional unit derived from a (meth)acrylic compound.

The acrylic resin may be a commercially available product.

Examples of the commercially available product include JURYMER ET-410 (manufactured by TOAGOSEI CO., LTD.) and EM-48D (manufactured by Daicel Corporation).

The binder resin may be a resin other than the polyester resin, the polyurethane resin, and the acrylic resin. Examples of other resins include polystyrene, polyolefin, and polyamide.

The binder resin contained in the base layer preferably includes at least one of the polyester resin, the polyurethane resin, or the acrylic resin. A mass ratio of the polyester resin, the polyurethane resin, and the acrylic resin (polyester resin:polyurethane resin:acrylic resin) is preferably 0.1 to 0.9:0.1 to 0.9:0 to 0.3, more preferably 0.3 to 0.7:0.3 to 0.7:0 to 0.2, and particularly preferably 0.4 to 0.6:0.4 to 0.6:0.

A content of the binder resin is preferably 67% by mass to 97% by mass, more preferably 77% by mass to 97% by mass, and particularly preferably 87% by mass to 97% by mass with respect to the total solid content contained in the base layer. In a case where the number of kinds of resins is two or more, the above-described content means the total content of the resins.

The base layer preferably contains at least one crosslinking agent of an oxazoline compound or a carbodiimide compound. The crosslinking agent may be used alone or in combination of two or more kinds thereof.

The oxazoline compound is a compound having an oxazoline group.

Examples of the oxazoline compound include a polymer having an oxazoline group, for example, a polymer obtained by copolymerizing a polymerizable monomer having an oxazoline group with other polymerizable monomers as necessary by a known method (for example, solution polymerization, emulsion polymerization, or the like). Examples of the polymerizable monomer having an oxazoline group include 2-vinyl-2-oxazoline, 2-vinyl-4-methyl-2-oxazoline, 2-vinyl-5-methyl-2-oxazoline, 2-isopropenyl-2-oxazoline, 2-isopropenyl-4-methyl-2-oxazoline, and 2-isopropenyl-5-methyl-2-oxazoline.

The oxazoline compound may be a commercially available product.

Examples of the commercially available product include EPOCROS K-2020E, EPOCROS K-2010E, EPOCROS K-2020E, EPOCROS K-2030E, EPOCROS WS-300, EPOCROS WS-500, and EPOCROS WS-700 (manufactured by Nippon Shokubai Co., Ltd.).

The carbodiimide compound is a compound having a functional group represented by -N=C=N-. Polycarbodiimide is usually synthesized by a condensation reaction of an organic diisocyanate. The organic diisocyanate is not particularly limited and may be an aromatic diisocyanate or an aliphatic diisocyanate, but from the viewpoint of reactivity, an aliphatic diisocyanate is preferable. As a raw material for synthesizing the polycarbodiimide, an organic isocyanate, an organic diisocyanate, an organic triisocyanate, or the like is used. Examples of the organic isocyanate include an aromatic isocyanate and an aliphatic isocyanate.

Examples of the organic diisocyanate include 4,4'-diphenylmethane diisocyanate, 4,4'-diphenyldimethylmethane diisocyanate, 1,4-phenylenediisocyanate, 2,4-tolylene diisocyanate, 2,6-tolylene diisocyanate, hexamethylene diisocyanate, cyclohexane diisocyanate, xylylene diisocyanate, 2,2,4-trimethylhexamethylene diisocyanate, 4,4'-dicyclohexylmethane diisocyanate, and 1,3-phenylenediisocyanate.

Examples of an organic monoisocyanate include isophorone isocyanate, phenyl isocyanate, cyclohexyl isocyanate, butyl isocyanate, and naphthyl isocyanate.

In addition, the carbodiimide compound may be a commercially available product.

Examples of the commercially available product thereof include CARBODILITE V-02-L2 (manufactured by Nisshinbo Chemical Inc.).

A content of the crosslinking agent is preferably 3% by mass to 30% by mass and more preferably 3% by mass to 15% by mass with respect to the content of the binder resin. In a case where the content of the crosslinking agent is within the above-described range, the adhesiveness to the substrate is further improved. In a case where the content of the crosslinking agent is 3% by mass or more with respect to the content of the binder resin, the ink penetrates well into the base layer, and the ink adhesiveness immediately after the image recording is easily enhanced. In a case where the content of the crosslinking agent is 30% by mass or less with respect to the content of the binder resin, the crosslinking reaction of the base layer does not proceed too much and the hardness of the base layer is not too high, so that it is easy to improve the ink adhesiveness after the heating treatment.

The base layer may contain, in addition to the binder resin and the crosslinking agent, a surfactant, a lubricant, an antifoaming agent, an anti-foaming agent, a dye, a fluorescent brightening agent, a preservative, a water resistance agent, particles, distilled water, or the like, as necessary.

The particles may be organic particles or inorganic particles.

Examples of the organic particles include particles of polystyrene, polymethyl methacrylate (PMMA), a silicone resin, a benzoguanamine resin, or the like.

Examples of the inorganic particles include particles of silica, calcium carbonate, magnesium oxide, magnesium carbonate, or the like.

The particles may be a commercially available product.

Examples of the commercially available product include crosslinked PMMA particles MR-2G (manufactured by Soken Chemical & Engineering Co., Ltd.), silica particles Seahostar KE-W10 (manufactured by NIPPON SHOKUBAI CO., LTD.), "Quartron PL-3" (manufactured by Fuso Chemical Industry Co., Ltd.), and OX-50 (manufactured by Nippon Aerosil Co., Ltd.).

Among these, silica is preferable because deterioration of adhesiveness in a case of being exposed to a moist heat atmosphere can be suppressed.

The particles may be used alone or in combination of two or more kinds thereof.

An average particle diameter of the particles is preferably 10 nm to 700 nm, more preferably 20 nm to 300 nm, and still more preferably 20 nm to 100 nm. By using particles having an average particle diameter within the above-described range, favorable easy adhesiveness can be obtained. The shape of the particles is not particularly limited, and may be any of a spherical shape, an amorphous shape, or a needle shape.

A thickness of the base layer is, for example, preferably 0.01 μm to 10 μm, more preferably 0.01 to 5 μm, and particularly preferably 0.05 to 1 μm.

The image recorded material according to the present disclosure may further include an overcoat layer on the ink jet image. As the overcoat layer, by providing a transparent layer having a small difference in refractive index from the ink jet image, graininess and scattering can be reduced, and vividness can be imparted.

Examples of a method of forming the overcoat layer include a method of bonding a film having a pressure-sensitive adhesive layer such as OCA to the ink jet image, a method of applying a composition for forming the overcoat layer and drying the composition, and a method of curing a composition for forming the overcoat layer, which consists of a curable monomer or the like, to form a film.

[Decorative molded body]

In a case where the image recorded material according to the present disclosure is a decorative sheet, it is suitable for producing a decorative molded body.
The decorative molded body according to the present disclosure is preferably a decorative molded body including a molded product of the image recorded material according to the present disclosure.
Specifically, a decorative molded body can be produced by, for example, molding the image recorded material according to the present disclosure into a three-dimensional shape. A molding die such as a metal mold may be used for the molding. The decorative molded body can be used for obtaining a decorative article by being applied to an article having a desired three-dimensional shape.
The surface of the image recorded material according to the present disclosure may be flat or may have an uneven structure, but in order to obtain more favorable color developability and stereoscopic effect, it is preferable that a portion having a flat surface occupies a certain area or more.

[Manufacturing method of image recorded material]

The manufacturing method of an image recorded material according to the present disclosure preferably includes a step (ink preparation step) of preparing an ink containing a solvent having a boiling point of 100°C or higher and lower than 300°C, a liquid crystal compound, a chiral agent, a polymerization initiator, and a surfactant; a step (substrate heating step) of heating a substrate to 45°C or higher; a step (ink applying step) of applying the ink onto the heated substrate by an ink jet recording method; a step (ink heating step) of heating the applied ink; and a step (active energy ray irradiating step) of irradiating the applied ink with an active energy ray.
Hereinafter, each step in the manufacturing method of an image recorded material according to the present disclosure will be described in detail.

(Ink preparation step)

The manufacturing method of an image recorded material according to the present disclosure includes a step of preparing an ink containing a solvent having a boiling point of 100°C or higher and lower than 300°C, a polymerizable liquid crystal compound, a chiral compound, a polymerization initiator, and a surfactant.

<Polymerizable liquid crystal compound>

In the present disclosure, the polymerizable liquid crystal compound refers to a liquid crystal compound having a polymerizable group.
The liquid crystal compound may be a rod-like liquid crystal compound or a disk-like liquid crystal compound, but is preferably a rod-like liquid crystal compound.
Examples of the rod-like liquid crystal compound include a rod-like nematic liquid crystal compound. As the rod-like nematic liquid crystal compound, an azomethine compound, an azoxy compound, a cyano biphenyl compound, a cyanophenyl ester compound, benzoic acid ester, cyclohexane carboxylic acid phenyl ester, a cyanophenyl cyclohexane compound, a cyano-substituted phenyl pyrimidine compound, an alkoxy-substituted phenyl pyrimidine compound, a phenyl dioxane compound, a tolane compound, or an alkenylcyclohexylbenzonitrile compound is preferably used. As the rod-like liquid crystal compound, not only a low-molecular-weight liquid crystal compound but also a high-molecular-weight liquid crystal compound can be used.
The polymerizable liquid crystal compound is obtained by introducing a polymerizable group into the liquid crystal compound. Examples of the polymerizable group include a polymerizable unsaturated group, an epoxy group, and an aziridinyl group. Among these, as the polymerizable group, a polymerizable unsaturated group is preferable, and an ethylenically unsaturated group is particularly preferable. The number of polymerizable groups included in the polymerizable liquid crystal compound is preferably 1 to 6 and more preferably 1 to 3. From the viewpoint of the durability of the image to be obtained, the polymerizable liquid crystal compound more preferably has two polymerizable groups in a molecule.
Examples of the polymerizable liquid crystal compound include compounds described in "Makromol. Chem., vol. 190, p. 2255 (1989), Advanced Materials, vol. 5, p. 107 (1993)", US4683327A, US5622648A, US5770107A, WO95/22586A, WO95/24455A, WO97/00600A, WO98/23580A, WO98/52905A, JP1989-272551A (JP-H1-272551A), JP1994-16616A (JP-H6-16616A), JP1995-110469A (JP-H7-110469A), JP1999-80081A (JP-H11-80081A), JP2001-328973A, and the like. In addition, the polymerizable liquid crystal compound may be a compound described in WO2017/169696A and WO2019/181247A.
Specific examples of the polymerizable liquid crystal compound include the following compounds (1) to (17). The

polymerizable liquid crystal compound is not limited to the following examples.

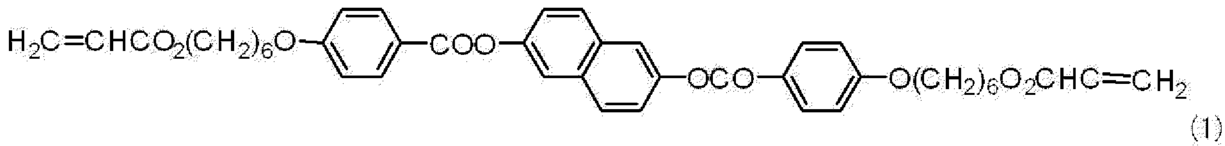
(1)

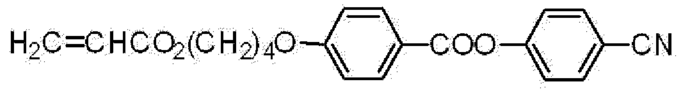
(2)

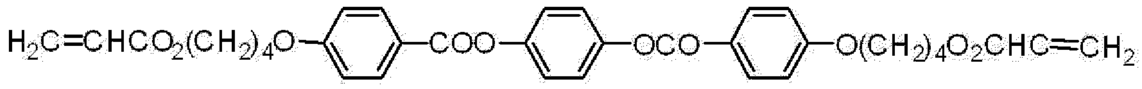
(3)

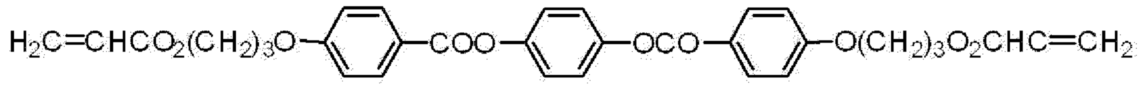
(4)

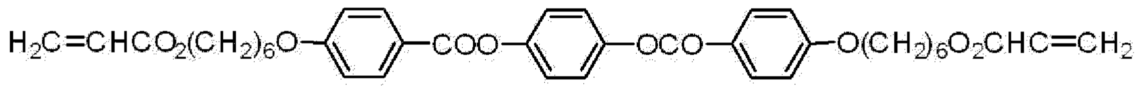
(5)

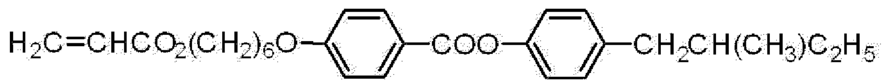
(6)

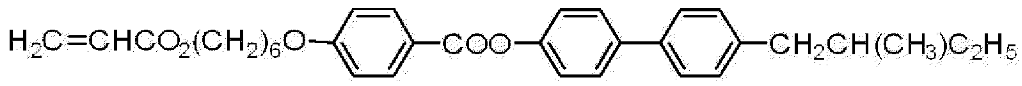
(7)

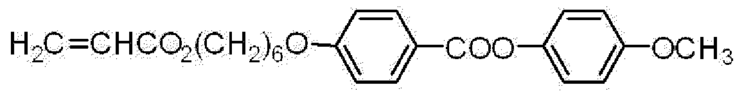
(8)

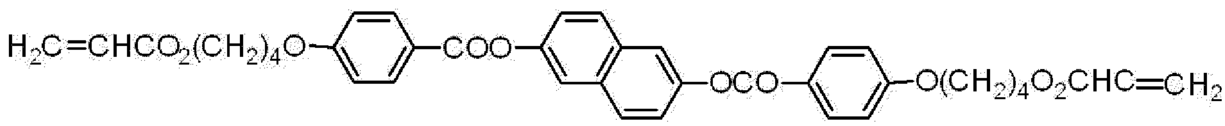
(9)

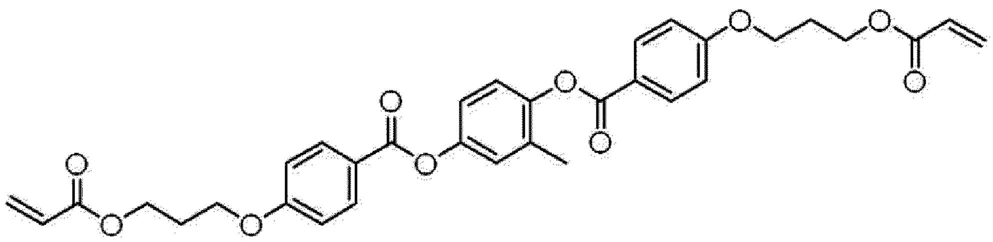
(10)

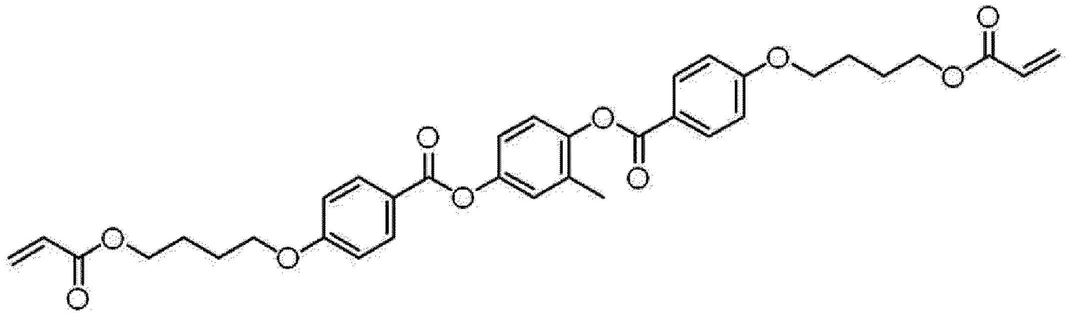

(11)

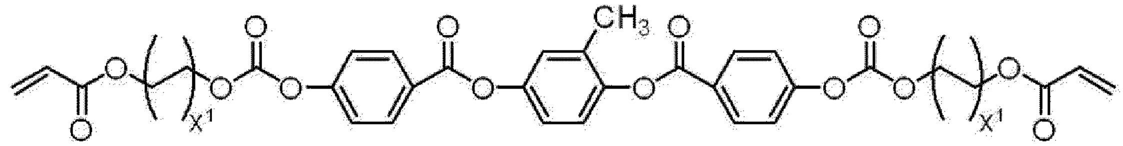

(12)

In the compound (12), $X^1$'s each independently represent an integer of 2 to 5.

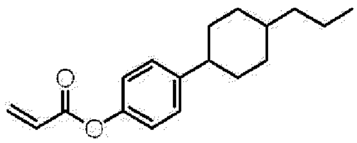

(13)

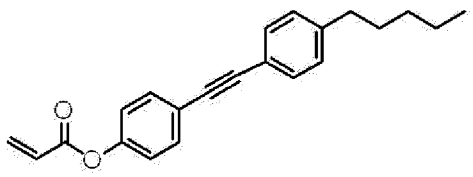

(14)

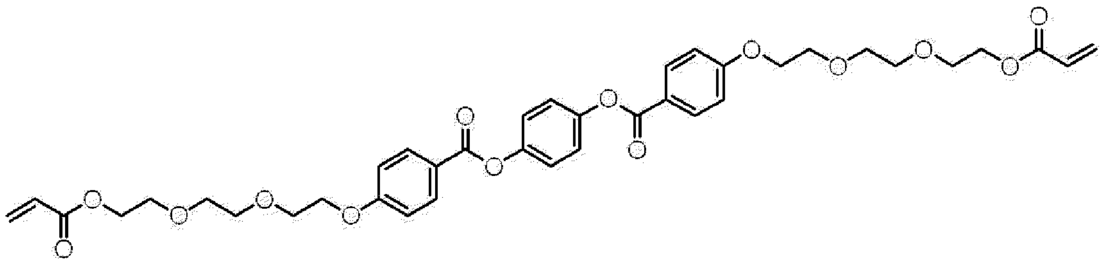

(15)

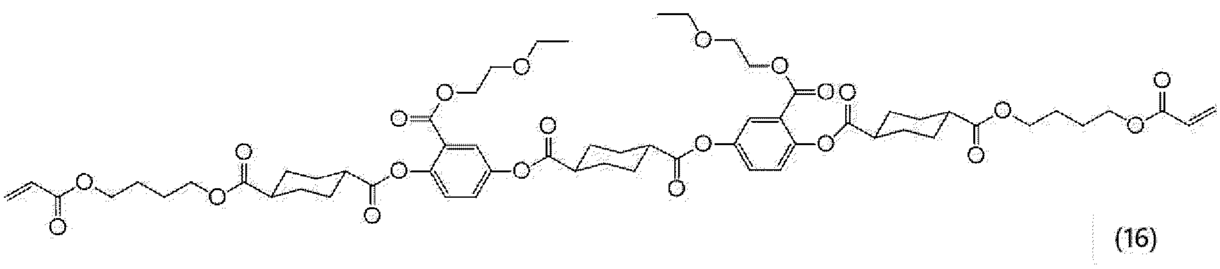

(16)

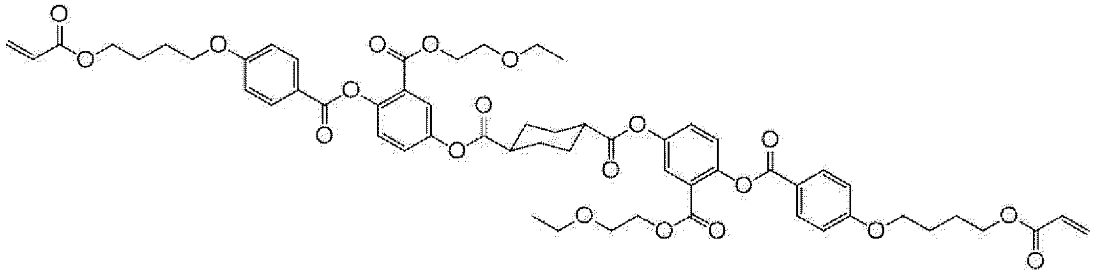

(17)

Examples of the polymerizable liquid crystal compound other than those exemplified above include cyclic organopolysiloxane compounds described in JP1982-165480A (JP-S57-165480A).

The ink may contain only one polymerizable liquid crystal compound or two or more polymerizable liquid crystal compounds.

Among these, the ink preferably contains two or more polymerizable liquid crystal compounds different from each other; and more preferably contains three or more polymerizable liquid crystal compounds different from each other. In a case where two or more polymerizable liquid crystal compounds are used, stability of the ink can be further improved.

A content of the polymerizable liquid crystal compound is preferably 1% by mass to 70% by mass, more preferably 5% by mass to 60% by mass, and particularly preferably 15% by mass to 45% by mass with respect to the total amount of the ink.

In the present disclosure, in a case where two or more inks (for example, a first ink, a second ink, a third ink, and the like) are prepared, from the viewpoint of improving color reproducibility, the first ink and the second ink may have the same or different types of polymerizable liquid crystal compounds and the same or different contents of the polymerizable liquid crystal compounds. In addition, in a case where the third ink is used together with the first ink and the second ink, the first ink, the second ink, and the third ink may have the same or different types of polymerizable liquid crystal compounds and the same or different contents of the polymerizable liquid crystal compounds. A pitch of a helical structure of cholesteric liquid crystals derived from the polymerizable liquid crystal compounds and the wavelength of light to be selectively reflected vary with the types of the polymerizable liquid crystal compounds. By varying the types of the polymerizable liquid crystal compounds, it is possible to obtain ink films of different color tones. In addition, by varying the contents of the polymerizable liquid crystal compounds, it is possible to vary the mixing ratio of the polymerizable liquid crystal compounds to the chiral compound and to obtain ink films of different color tones.

(Chiral compound)

The chiral compound is also referred to as an optically active compound. The chiral compound has a function of inducing the helical structure of the polymerizable liquid crystal compound. A twist direction or pitch of the induced helical structure varies with the type and content of the chiral compound.

As the chiral compound, known compounds can be used without particular limitations (for example, see Liquid Crystal Device Handbook, Chapter 3, Section 4-3, Chiral Agent for TN and STN, p. 199, edited by the 142nd Committee of Japan Society for the Promotion of Science, 1989), and examples thereof include isosorbide derivatives and isomannide derivatives.

The chiral compound generally includes an asymmetric carbon atom, but the chiral compound may not include the asymmetric carbon atom as long as the compound has chirality. Examples of the chiral compound include an axially chiral compound having a binaphthyl structure, a helically chiral compound having a helicene structure, and a planarly chiral compound having a cyclophane structure.

The chiral compound may have a polymerizable group. In a case where the chiral compound has a polymerizable group, a polymer having a structural unit derived from the polymerizable liquid crystal compound and a structural unit derived from the chiral compound is formed by a polymerization reaction between the chiral compound and the polymerizable liquid crystal compound. In a case where the chiral compound has a polymerizable group, the polymerizable group is preferably the same type of group as the polymerizable group included in the polymerizable liquid crystal compound. Therefore, the polymerizable group in the chiral compound is preferably a polymerizable unsaturated group, an epoxy group, or an aziridinyl group, more preferably a polymerizable unsaturated group, and particularly preferably an ethylenically unsaturated group. In addition, the chiral compound itself may be a liquid crystal compound.

A content of the chiral compound in the ink is preferably 0.5% by mass to 30% by mass with respect to the total mass of the liquid crystal compound. It is preferable that the content of the chiral compound is lower since liquid crystallinity tends to be not affected. Therefore, the above-described chiral compound is preferably a compound having a strong twisting power, so that a desired twisted alignment of a helical pitch can be achieved even in a small amount.

Examples of the chiral compound having such a strong twisting power include chiral agents described in JP2002-302487A, JP2002-80478A, JP2002-80851A, JP2002-179668A, JP2002-179670A, JP2002-338575A, JP2002-180051A, JP1987-81354A (JP-S62-81354A), WO2002/006195A, JP2011-241215A, JP2003-287623A, JP2002-302487A, JP2002-80478A, JP2002-80851A, and JP2014-034581A; and LC-756 manufactured by BASF SE.

Specific examples of the chiral compound include the following compounds. The chiral compound which can be used in the ink is not limited to the following examples. "Me" in the compound means a methyl group.

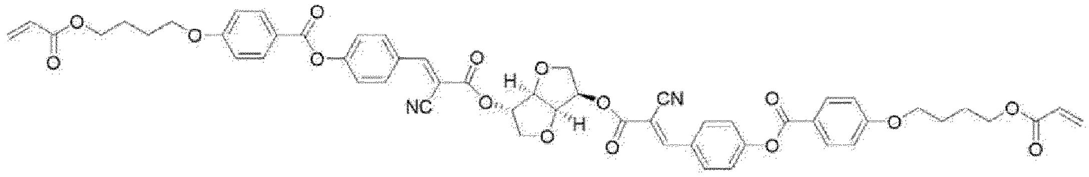

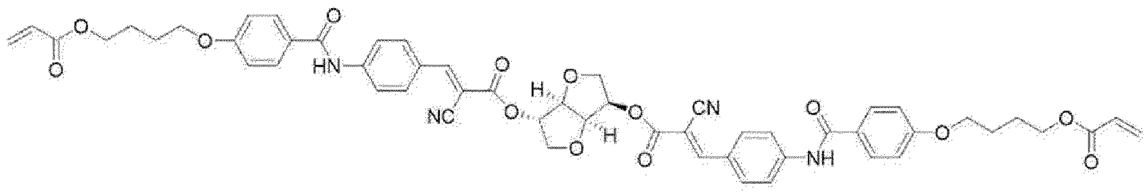

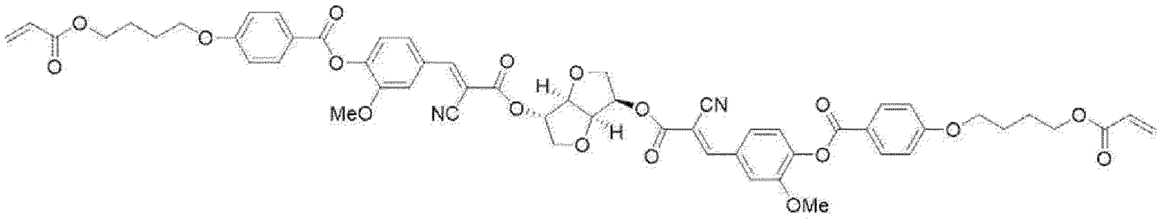

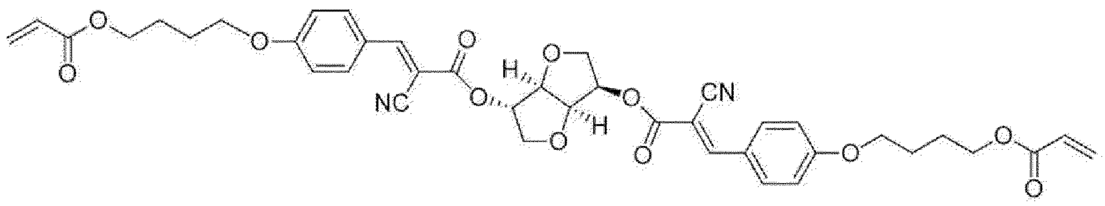

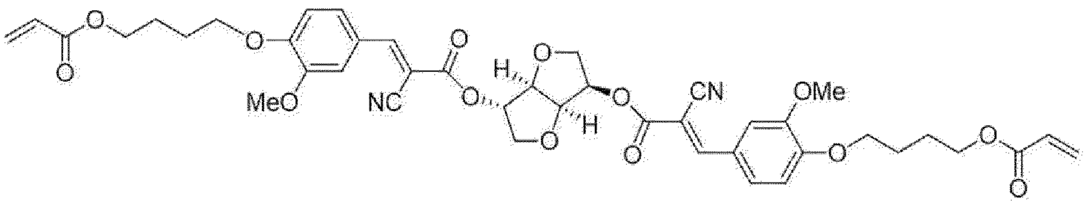

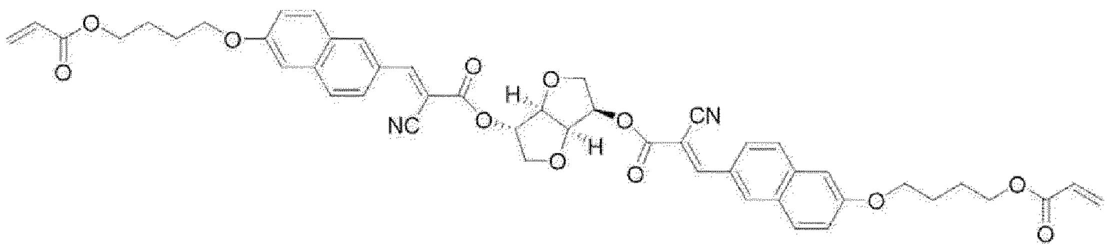

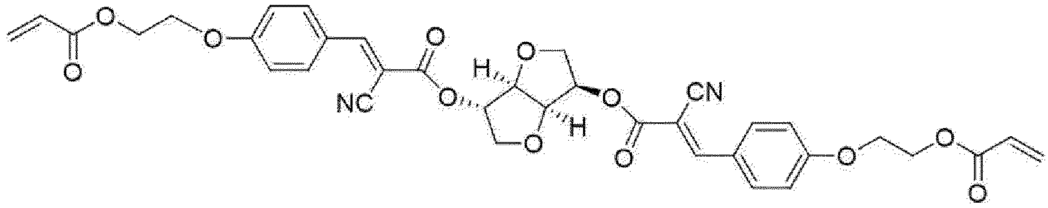

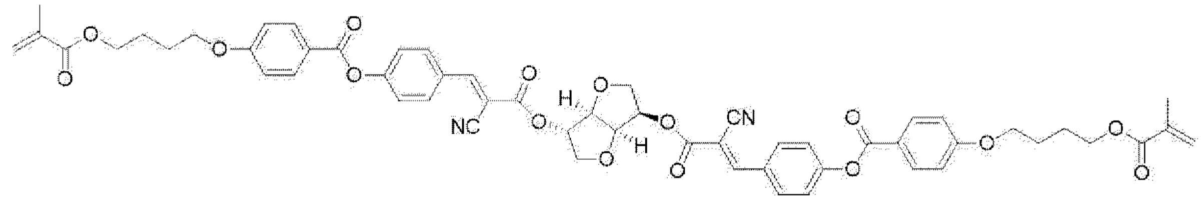

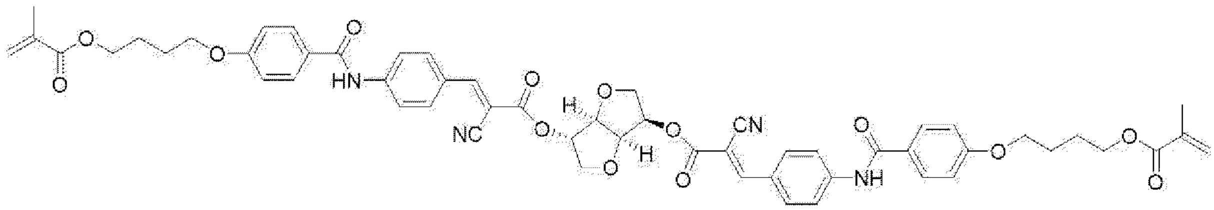

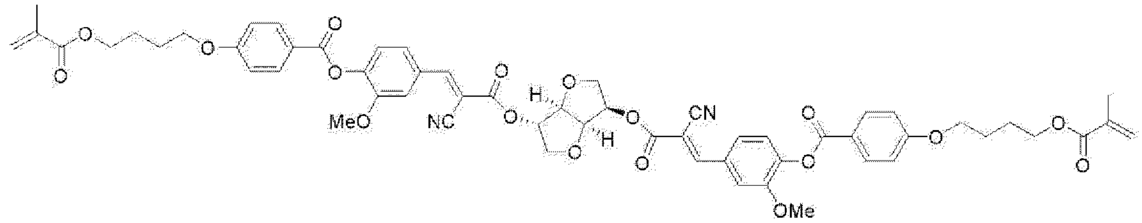

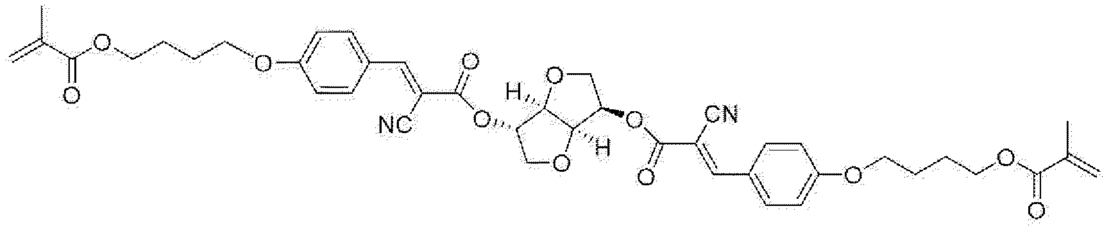

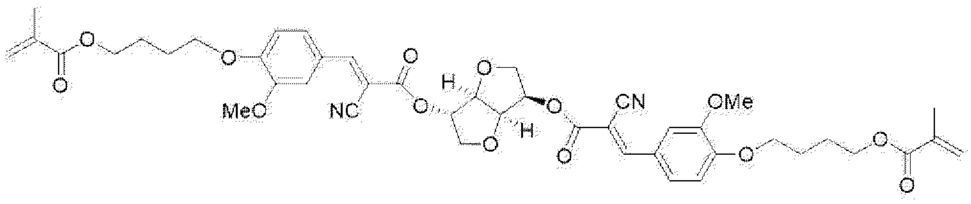

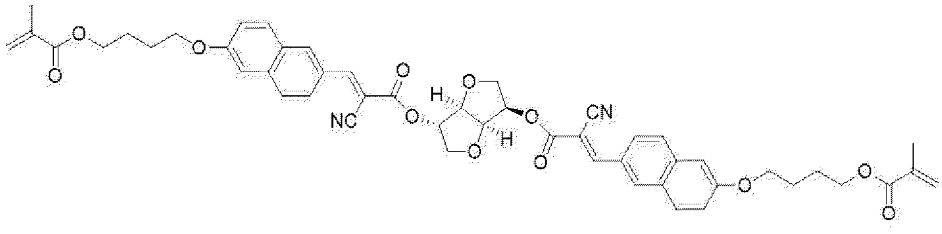

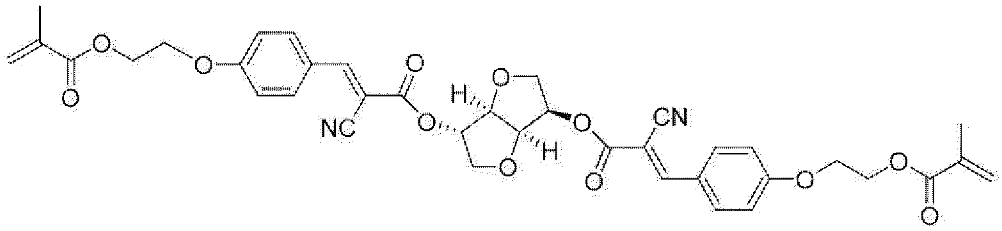

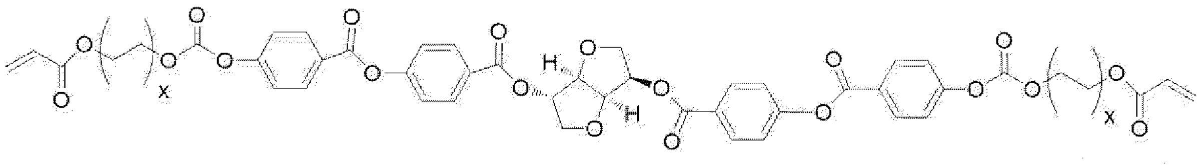

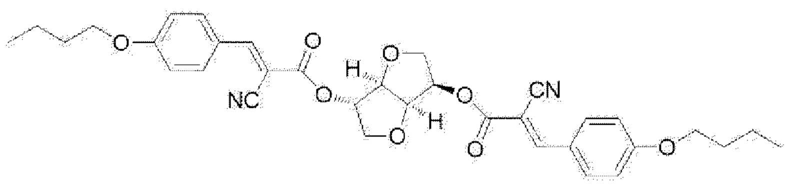

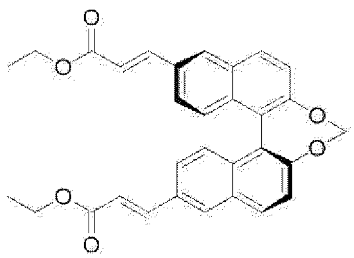

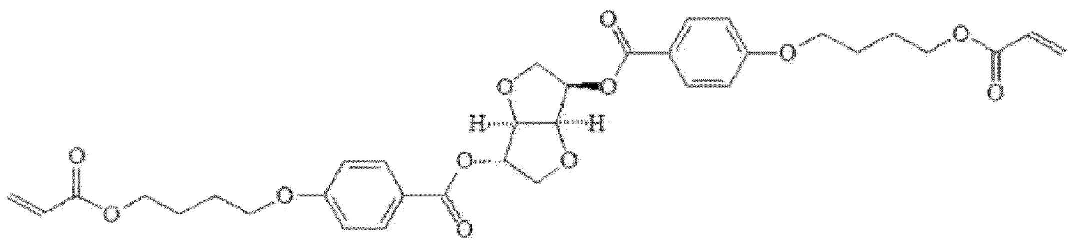

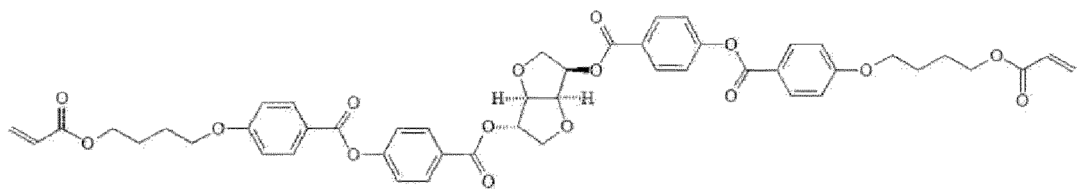

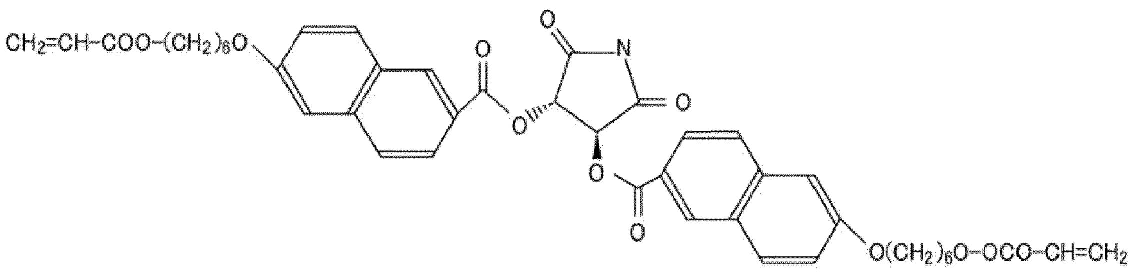

In the above compounds, X's each independently represent an integer of 2 to 5.

A content of the chiral compound is preferably 1 part by mass to 15 parts by mass and more preferably 3 parts by mass to 9 parts by mass with respect to 100 parts by mass of the content of the polymerizable liquid crystal compound in the ink.

In the present disclosure, in a case where two or more inks (for example, a first ink, a second ink, a third ink, and the like) are prepared, it is preferable that the first ink and the second ink have different contents of the chiral compound. In addition, in a case where the third ink is further used, it is preferable that the content of the chiral compound vary between the first ink, the second ink, and the third ink. A pitch of a helical structure of cholesteric liquid crystals derived from the polymerizable liquid crystal compounds and the wavelength of light to be selectively reflected vary with the contents of the chiral compounds. By varying the contents of the chiral compounds, it is possible to obtain ink films of different color tones. As the content of the chiral compound is larger, the reflection wavelength tends to be shorter; and as the content of the chiral compound is smaller, the reflection wavelength tends to be longer.

<Solvent having boiling point of 100°C or higher and lower than 300°C>

It is sufficient that the solvent has a boiling point of 100°C or higher and lower than 300°C, and the solvent can be appropriately selected depending on the purpose. The boiling point is measured at 1 atm.

In a case where the boiling point of the solvent is 100°C or higher, jetting stability is improved. In addition, the line indicating the bright portion or the dark portion can be the wavy line depending on the drying rate during the image recording, and an image exhibiting a vivid color can be recorded.

In a case where the boiling point of the solvent is lower than 300°C, landing interference during the image recording is suppressed, and a high-definition image can be recorded. Furthermore, it is preferable because the line indicating the bright portion or the dark portion is the wavy line.

Examples of the solvent include a ketone-based solvent, an alkyl halide-based solvent, an amide-based solvent, a sulfoxide-based solvent, a heterocyclic compound, a hydrocarbon-based solvent, an ester-based solvent, and an ether-based solvent (for example, diethylene glycol diethyl ether).

In addition, the solvent may be an alcohol-based solvent or a pyrrolidone-based solvent.

Examples of the ether-based solvent include glycol ether and glycol ether ester.

Examples of the glycol ether include ethylene glycol monomethyl ether, diethylene glycol diethyl ether, triethylene glycol monobutyl ether, diethylene glycol methyl ethyl ether, diethylene glycol dimethyl ether, dipropylene glycol dimethyl ether, diethylene glycol monoethyl ether, dipropylene glycol monobutyl ether, and triethylene glycol monomethyl ether.

Examples of the ketone-based solvent include methyl ethyl ketone and cyclohexanone.

Examples of the ester include 3-methoxybutyl acetate and $\gamma$-butyrolactone.

Examples of the pyrrolidone-based solvent include N-methyl-2-pyrrolidone.

Among these, as the ether-based solvent, diethylene glycol diethyl ether, ethylene glycol monomethyl ether, or 3-methoxybutyl acetate is preferable.

The boiling point of the solvent is more preferably 100°C to 250°C, still more preferably 100°C to 220°C, and particularly preferably 120°C to 190°C.

A content of the solvent having a boiling point of 100°C or higher and lower than 300°C is preferably 20% by mass to 90% by mass, preferably 40% by mass to 80% by mass, and still more preferably 50% by mass to 80% by mass with respect to the total amount of the ink. These may be used alone or in combination of two or more.

<Polymerization initiator>

The polymerization initiator is preferably a photopolymerization initiator, and more preferably a radical polymerization initiator having a function of generating radicals by irradiation with ultraviolet rays.

Examples of the photopolymerization initiator include $\alpha$-carbonyl compounds (described in US2367661A and US2367670A), acyloin ethers (described in US2448828A), $\alpha$-hydrocarbon-substituted aromatic acyloin compounds (described in US2722512A), polynuclear quinone compounds (described in US3046127A and US2951758A), combinations of triarylimidazole dimer and p-aminophenyl ketone (described in US3549367A), acridine and phenazine compounds (described in JP1985-105667A (JP-S60-105667A) and US4239850A), and oxadiazole compounds (described in US4212970A).

Examples of the polymerization initiator include an alkylphenone-based photopolymerization initiator, an acylphosphine oxide-based photopolymerization initiator, an intramolecular hydrogen withdrawing-type photopolymerization initiator, an oxime ester-based photopolymerization initiator, and a cationic photopolymerization initiator. Among these, as the polymerization initiator, an acylphosphine oxide-based photopolymerization initiator is preferable, and specifically, (2,4,6-trimethylbenzoyl)diphenylphosphine oxide or bis(2,4,6-trimethylbenzoyl)phenylphosphine oxide is

preferable.

In addition, the ink preferably contains two or more photopolymerization initiators having different absorption wavelengths. In a case where two or more photopolymerization initiators having different absorption wavelengths are contained, in a case of curing with a light source having emission lines at a plurality of wavelengths, a radical generation amount per exposure amount increases by mixing and using photopolymerization initiators suitable for the light source. As a result, curing sensitivity is improved, and rub resistance and adhesiveness of the image are improved.

A content of the polymerization initiator is preferably 0.1 parts by mass to 20 parts by mass and more preferably 0.5 parts by mass to 12 parts by mass with respect to 100 parts by mass of the polymerizable liquid crystal compound.

In addition, a content of the polymerization initiator is preferably 1.3% by mass or more, and more preferably 1.5% by mass or more with respect to the total amount of the ink. The upper limit value of the content of the polymerization initiator is, for example, 7% by mass.

<Alignment control agent (alignment agent)>

The ink may contain an alignment control agent. By containing the alignment control agent in the ink, it is possible to stably or rapidly form the cholesteric liquid crystal layer.

Examples of the alignment control agent include a fluorine-containing (meth)acrylate-based polymer, compounds represented by General Formulae (X1) to (X3) described in WO2011/162291A, compounds described in paragraphs [0007] to [0029] of JP2012-211306A, compounds described in paragraphs [0020] to [0031] of JP2013-47204A, compounds described in paragraphs [0165] to [0170] of WO2016/009648A, and compounds described in paragraphs [0077] to [0081] of WO2016/092844A and General Formulae (Cy201) to (Cy211) described in JP4592225B. These compounds can reduce a tilt angle of molecules of the liquid crystal compound or substantially horizontally align the molecules of the liquid crystal compound at an air interface of the layer. In the present specification, the "horizontal alignment" means that a major axis of the liquid crystal molecule is parallel to the film surface, but it does not require that the major axis is strictly parallel to the film surface. In the present specification, the "horizontal alignment" means an alignment in which the tilt angle with respect to the horizontal plane is less than 20°.

The alignment control agent may be used alone or in combination of two or more kinds thereof.

A content of the alignment control agent is not particularly limited, and is preferably 0.01 parts by mass to 10 parts by mass, more preferably 0.01 parts by mass to 5 parts by mass, and still more preferably 0.01 parts by mass to 1 part by mass with respect to 100 parts by mass of the polymerizable liquid crystal compound.

<Surfactant>

In a case where the ink contains a surfactant, the polymerizable liquid crystal compounds are horizontally aligned on the air interface side in the cured ink, and an effect of controlling the directions of the helical axes to be more uniform is obtained. The surfactant is preferably a compound which can function as an alignment control agent stably or rapidly establishing a cholesteric structure with planar alignment. Examples of the surfactant include a silicone-based surfactant and a fluorine-based surfactant, and a fluorine-based surfactant is preferable.

The fluorine-based surfactant may be a commercially available product on the market, and examples thereof include FTERGENT series (for example, FTERGENT 208G and the like) manufactured by NEOS COMPANY LIMITED.

A content of the surfactant is preferably 0.001 parts by mass to 10 parts by mass, more preferably 0.01 parts by mass to 5 parts by mass, and still more preferably 0.01 parts by mass to 1 part by mass with respect to 100 parts by mass of the content of the ink.

<Additive>

As long as the effect of the present disclosure is not impaired, the ink can contain an additive as necessary.

Examples of the additive include a crosslinking agent, a non-polymerizable polymer, an antioxidant, an ultraviolet absorber, a sensitizer, a stabilizer, a plasticizer, a chain transfer agent, a polymerization inhibitor, an antifoaming agent, a leveling agent, a thickener, a flame retardant, a dispersant, and a coloring material such as a dye and a pigment.

<Physical properties>

A viscosity of the ink is preferably 5 mPa·s or more, and more preferably 8 mPa·s or more. From the viewpoint of jettability of the ink, the upper limit value of the viscosity of the ink is, for example, 30 mPa·s.

The viscosity of the ink is measured at 25°C using a viscometer, and for example, a viscometer (product name "RE-85L", manufactured by TOKISANGYO) is used.

A surface tension of the ink is preferably 20 mN/m to 40 mN/m, more preferably 23 mN/m to 35 mN/m, still more

preferably 26 mN/m to 30 mN/m, and most preferably 26 mN/m to 29 mN/m.

The surface tension of the ink is measured at 25°C using a surface tensiometer, and for example, a surface tensiometer (product name "DY-700", manufactured by Kyowa Interface Science Co., Ltd.) is used.

The ink to be prepared in the ink preparation step may be only one kind or two or more kinds. From the viewpoint of being able to reproduce various colors, it is preferable that the ink is two or more kinds.

In a case where two or more kinds of inks are prepared, the types and contents of the respective components contained in the two or more kinds of inks may be partially different from each other, or may be the same as each other.

In the ink preparation step, from the viewpoint of ease of mixing the inks, it is preferable to prepare at least two inks containing the same type of polymerizable liquid crystal compounds and chiral compounds. In this case, it is preferable that the contents of the chiral compounds vary between at least two inks.

In a case where an absolute value of a difference between a maximal reflection wavelength of an ink film formed of a first ink and a maximal reflection wavelength of an ink film formed of a second ink is 80 nm or more, a color difference is large, which enables various colors to be reproduced. The above-described absolute value of the difference is more preferably 100 nm or more, and still more preferably 130 nm or more. The upper limit value of the above-described absolute value of the difference is, for example, 400 nm.

Hereinafter, a polymerizable liquid crystal compound contained in the first ink will be described as a first polymerizable liquid crystal compound; and a polymerizable liquid crystal compound contained in the second ink will be described as a second polymerizable liquid crystal compound. The same applies to other components contained in the inks.

In a case where the first polymerizable liquid crystal compound and the second polymerizable liquid crystal compound are the same and the first chiral compound and the second chiral compound are the same, by adjusting the contents of the polymerizable liquid crystal compounds or the chiral compounds, it is possible to set the absolute value of the difference between the maximal reflection wavelength of the ink film formed of the first ink and the maximal reflection wavelength of the ink film formed of the second ink to be 80 nm or more.

Specifically, from the viewpoint of reproducing various colors, the maximal reflection wavelength of the ink film formed of the first ink is preferably 380 nm to 490 nm; and the maximal reflection wavelength of the ink film formed of the second ink is preferably 600 nm to 800 nm. In addition, the maximal reflection wavelength of the ink film formed of the first ink is more preferably 390 nm to 450 nm; and the maximal reflection wavelength of the ink film formed of the second ink is more preferably 600 nm to 750 nm.

The maximal reflection wavelength of the ink film is measured by the following method.

The ink is applied onto a transparent polyethylene terephthalate substrate and heated at 80°C for 5 minutes. Next, the ink film is formed by exposing the ink once at 120 W and a transportation speed of 10 m/min, using a metal halide lamp (product name "CSOT-40", manufactured by GS Yuasa International Ltd.). Using a fluorescence spectrophotometer (product name "FD-7", manufactured by Konica Minolta, Inc.), a concealment ratio measurement paper (standard: JIS K 5600-4-1: 1999, (ISO/FDIS 6504-3: 1998), manufactured by TP Giken Co., Ltd.) is placed on a side of the substrate opposite to the image recording surface, visible light is incident from the image recording surface side of the substrate, and a reflectivity in a visible light region is measured.

In addition, in a case where two or more kinds of inks are prepared and each of the two or more kinds of inks is used as an ink film, the color difference between two ink films is preferably 25 or more, and more preferably 30 or more. The upper limit value of the color difference is not particularly limited.

In a case where three kinds of inks are prepared, two kinds of inks among the three kinds of inks may satisfy the above-described condition of the color difference.

In a case where the color difference is 25 or more, various colors can be reproduced.

The color difference of the ink film is measured by the following method.

The ink is applied onto a transparent polyethylene terephthalate substrate and heated at 80°C for 5 minutes. Next, the ink film is formed by exposing the ink once at 120 W and a transportation speed of 10 m/min, using a metal halide lamp (product name "CSOT-40", manufactured by GS Yuasa International Ltd.). Using a fluorescence spectrophotometer (product name "FD-7", manufactured by Konica Minolta, Inc.), a concealment ratio measurement paper (standard: JIS K 5600-4-1: 1999, (ISO/FDIS 6504-3: 1998), manufactured by TP Giken Co., Ltd.) is placed under the substrate on a side opposite to the image recording surface, and L*, a*, and b* are measured at a viewing angle of 2° from the image recording surface. A difference between L* of the first ink film and L* of the second ink film is denoted as ΔL*, a difference between a* of the first ink film and a* of the second ink film is denoted as Δa*, and a difference between b* of the first ink film and b* of the second ink film is denoted as Δb*. A color difference ΔE*ab is calculated by the following expression.

$$\Delta E^{*}ab = \{(\Delta L^{*})^2 + (\Delta a^{*})^2 + (\Delta b^{*})^2\}^{1/2}$$

In the ink preparation step, from the viewpoint of reproducing more various colors, it is preferable to further

prepare a third ink. An absolute value of a difference between the maximal reflection wavelength of the ink film formed of the first ink and the maximal reflection wavelength of the ink film formed of the second ink or a maximal reflection wavelength of an ink film formed of the third ink is preferably 40 nm or more. In other words, it is preferable that both the absolute value of the difference between the maximal reflection wavelength of the ink film formed of the first ink and the maximal reflection wavelength of the ink film formed of the third ink, and the absolute value of the difference between the maximal reflection wavelength of the ink film formed of the second ink and the maximal reflection wavelength of the ink film formed of the third ink are 40 nm or more.

The third polymerizable liquid crystal compound contained in the third ink may be the same or different from any of the first polymerizable liquid crystal compound or the second polymerizable liquid crystal compound. The third chiral compound contained in the third ink may be the same or different from any of the first chiral compound and the second chiral compound. The third organic solvent contained in the third ink may be the same or different from any of the first organic solvent and the second organic solvent.

The same compound means that two compounds have the same structure.

In a case where the absolute value of the difference between the maximal reflection wavelength of the ink film formed of the first ink and the maximal reflection wavelength of the ink film formed of the second ink or the maximal reflection wavelength of the ink film formed of the third ink is preferably 40 nm or more, it is possible to reproduce more various colors. The above-described absolute value of the difference is more preferably 40 nm or more, and still more preferably 70 nm or more. The upper limit value of the above-described absolute value of the difference is, for example, 150 nm.

For example, in a case where the first polymerizable liquid crystal compound, the second polymerizable liquid crystal compound, and the third polymerizable liquid crystal compound are the same as each other, and the first chiral compound, the second chiral compound, and the third chiral compound are the same as each other, by adjusting the contents of the polymerizable liquid crystal compounds or the chiral compounds, it is possible to set the absolute value of the difference between the maximal reflection wavelength of the ink film formed of the first ink or the maximal reflection wavelength of the ink film formed of the second ink and the maximal reflection wavelength of the ink film formed of the third ink to be 40 nm or more.

Specifically, from the viewpoint of reproducing more various colors, the maximal reflection wavelength of the ink film formed of the first ink is preferably 380 nm to 490 nm; and the maximal reflection wavelength of the ink film formed of the second ink is preferably 600 nm to 800 nm; and the maximal reflection wavelength of the ink film formed of the third ink is preferably 500 nm to 590 nm. In addition, the maximal reflection wavelength of the ink film formed of the first ink is more preferably 390 nm to 470 nm; the maximal reflection wavelength of the ink film formed of the second ink is more preferably 600 nm to 700 nm; and the maximal reflection wavelength of the ink film formed of the third ink is more preferably 500 nm to 570 nm.

(Substrate heating step)

The manufacturing method of an image recorded material according to the present disclosure includes a step of heating the substrate to 45°C or higher. By heating the substrate in advance, the ink can be applied onto the heated substrate. By applying the ink onto the heated substrate, the solvent contained in the ink can be evaporated more quickly. In this manner, the line indicating the bright portion or the dark portion due to the locally formed alignment of the liquid crystal in a case where the ink is applied can be made a wavy line and fixed in a state of being inclined with respect to the substrate. Desired diffuse reflectivity and chromaticity can be obtained, and a portion where brightness and darkness are provided in the image and stereoscopic vision is exhibited can be formed.

The details of the substrate are as described above.

It is preferable that a surface energy of the substrate is higher than the surface tension of the ink. In a case where the surface energy of the substrate is higher than the surface tension of the ink, the wettability of the ink is improved, the landing interference of the ink during the image recording is suppressed, and thus the continuous film is easily formed and the color developability is improved.

The surface tension (25°C) of the ink is preferably 26 mN/m to 29 mN/m, and the surface energy of the substrate is preferably 40 mN/m to 58 mN/m. The surface energy of the substrate is more preferably 40 mN/m to 53 mN/m, and most preferably 43 mN/m to 53 mN/m. In a case where the surface energy of the substrate is within the above-described range, the wettability of the ink on the substrate and the angle of the ink film end with respect to the substrate are within an appropriate range. As a result, the line indicating the bright portion or the dark portion is likely to be a wavy line and is likely to be inclined, and a shadow can be adopted to the obtained image.

In the substrate heating step, an unit for heating the substrate is not particularly limited, and examples thereof include a heat drum, hot air, an infrared lamp, an oven, a heat plate, and a hot plate. A heating temperature of the substrate is 45°C or higher, preferably 50°C to 100°C, and more preferably 55°C to 80°C. A heating time is preferably 0.5 minutes or more, and the upper limit thereof is not particularly limited but is preferably 60 minutes or less.

(Ink applying step)

The manufacturing method of an image recorded material according to the present disclosure includes a step of applying the ink onto the heated substrate by an ink jet recording method.

In the present disclosure, the liquid crystal structure can be rapidly immobilized by applying the ink onto the heated substrate, and an image with a more stereoscopic effect can be obtained.

In a case where two or more kinds of inks are prepared in the ink preparation step, it is preferable that the two or more kinds of inks are used for forming a mixed region where the two or more kinds of inks are mixed with each other is formed on at least a part of the substrate.

The mixed region where the two kinds of inks are mixed with each other may be formed on at least a part of the substrate, or the mixed region may be formed on the entire surface of the substrate. In addition, as long as the mixed region is formed in a part of the substrate, the mixed region may not be formed in the other parts on the substrate.

In the present disclosure, the mixed region means a region where at least two inks are mixed together on the substrate. Examples of a specific aspect of forming the mixed region include the following two aspects.

In a case where at least two inks are continuously jetted, an ink is jetted first to form an ink landing region, and then the other ink is jetted and landed on the ink landing region such that at least the two inks are mixed together. In a case where at least two inks are jetted at the same time, the inks are landed such that ink landing regions formed of at least the two inks at least partially overlap with each other and at least the two inks are mixed together. The "mixed region" in the present disclosure does not include a region where ink landing regions partially overlap with each other as the inks spread on the substrate after at least two inks are jetted such that the ink landing regions do not overlap with each other.

Whether the mixed region is formed can be confirmed by the following method.

By measuring the color of the reflection wavelength of the mixed region with a fluorescence spectrodensitometer (product name "FD-7") or the like, it is possible to confirm whether the reflection wavelength of the mixed region is different from the reflection wavelength of a region which is not the mixed region. In addition, since the color developability of the mixed region is different from the color developability of the region which is not the mixed region, it is easy to visually confirm whether the mixed region is formed.

In the ink applying step, the ink film (also referred to as "ink layer") formed by applying the ink onto the substrate may be a single layer or may be laminated.

For example, as a method of recording an image on a substrate, there is a method of laminating the ink layer, but the number of steps can be reduced by forming the ink layer to be a single layer. In addition, it is sufficient that the ink is designed taking into consideration only interaction (for example, wettability) between the substrate and the ink, and there is no need to consider interaction between the ink layer and the ink, as compared with a case in which the ink layer is laminated. In a case where a plurality of inks are applied to form a structure body to be a single layer, a discontinuous portion of the stripe pattern in the cholesteric liquid crystal layer is reduced as compared with a case in which the ink layer is laminated, and thus an image having high color developability, transparency, and reflection anisotropy can be obtained.

As the ink jet recording method, a generally known method can be used, and examples thereof include an electric charge control method of jetting the ink composition by using an electrostatic attraction force; a drop-on-demand method (pressure pulse method) of using a vibration pressure of a piezo element; an acoustic ink jet method of converting an electric signal into an acoustic beam, irradiating the ink composition, and jetting the ink composition using a radiation pressure; and a thermal ink jet method of heating the ink composition to form air bubbles and utilizing the generated pressure.

In general, an image recording method by an ink jet recording device includes a shuttle scan method (also referred to as a "serial head method") of recording images using a short serial head, and a single-pass method (also referred to as a "line head method") that image recording is performed using a line head in which recording elements are arranged corresponding to the entire width direction of the substrate. In the shuttle scan method, images are recorded while scanning the serial head in the width direction of the substrate. On the other hand, in the single-pass method, images can be recorded on the entire surface of the substrate by scanning the substrate in the direction orthogonal to the arrangement direction of the recording elements. Therefore, different from the shuttle scan method, the single-pass method does not require a transport system of scanning the serial head, such as a carriage. In addition, in the single-pass method, movement of the carriage and complicated scanning control with the substrate are not required, and only the substrate moves, so that the recording speed can be increased as compared with the shuttle scan method.

The method of applying the ink is not particularly limited, but a multi-pass method is preferable. Since the amount of ink applied at one time is limited, the formation of the liquid crystal structure by heating is promoted, and the stripe pattern is likely to be wavy and inclined.

In the ink applying step, the ink is applied in an amount of preferably 0.1 $g/m^2$ to 20 $g/m^2$, more preferably 1 $g/m^2$ to 20 $g/m^2$, still more preferably 1 $g/m^2$ to 18 $g/m^2$, particularly preferably 3 $g/m^2$ to 25 $g/m^2$, and most preferably 3 $g/m^2$ to 20 $g/m^2$ per unit area.

Particularly, in the mixed region, at least two inks are mixed together, so that the ink application amount in the

mixed region is larger than the ink application amount in a region other than the mixed region. In a case where the inks are applied such that the total application amount is in a range of 3.0 $g/m^2$ to 20 $g/m^2$ in the mixed region, landed ink droplets do not easily spread, and a high-definition image can be obtained.

In the ink applying step, the inks are applied such that the total application amount of the polymerizable liquid crystal compounds contained in at least two inks per unit area is preferably in a range of 1 $g/m^2$ to 10 $g/m^2$, more preferably in a range of 1 $g/m^2$ to 8 $g/m^2$, still more preferably in a range of 1 $g/m^2$ to 7.5 $g/m^2$, and most preferably in a range of 1 $g/m^2$ to 7 $g/m^2$ in the mixed region.

In a case where the inks are applied such that the above-described total application amount is in a range of 1 $g/m^2$ to 10 $g/m^2$, the polymerizable liquid crystal compound is more uniformly aligned, and an image having high color developability can be obtained.

The maximum film thickness formed by one application is preferably 20 μm or less, more preferably 15 μm or less, and still more preferably 10 μm or less. In a case where the film thickness is 10 μm or less, poor alignment of liquid crystal molecules, defects, and the like are less likely to occur, and a more vivid color can be obtained.

The ink application amount is calculated using the following method.

On a substrate, an image having an area of 1 $m^2$ is recorded at a desired halftone dot rate (ratio of a portion where the image is recorded to the total area calculated as a percentage). The mass of the substrate before the image recording and the mass of the substrate after the image recording are measured, and the ink application amount is calculated from the difference in mass. The ink application amount can be arbitrarily changed by the setting of the halftone dot rate and the adjustment of the amount of ink jetted from a device.

The application amount of the polymerizable liquid crystal compound contained in the ink is calculated from the ink application amount and the content of the polymerizable liquid crystal compound contained in the ink.

In the ink applying step, the ink is applied such that an amount of ink droplets jetted from an ink jet head is preferably 1 pL (picoliter) to 30 pL, and more preferably 2 pL to 10 pL. The amount of droplets jetted means a volume of ink jetted from one nozzle at one time by the ink jet recording method.

In the ink applying step, the ink is applied such that the resolution is preferably 100 dpi (dot per inch) × 100 dpi to 2,400 dpi × 2,400 dpi, and more preferably 200 dpi × 200 dpi to 1,200 dpi × 1,200 dpi. The "dpi" means the number of dots per 25.4 mm.

In addition, in the ink applying step, the ink is applied such that a thickness of the ink film in the image recording performed once is preferably 1 μm to 20 μm, more preferably 1 μm to 15 μm, and still more preferably 1 μm to 8 μm. In a case where the ink is applied such that the thickness of the ink film is 1 μm to 20 μm, the applied ink is easily dried, the polymerizable liquid crystal compound more uniformly forms the wave-like structure or the inclined structure of the reflecting surface, and an image having high color developability is obtained.

The manufacturing method of an image recorded material according to the present disclosure includes a step of irradiating the ink with an active energy ray.

Examples of the active energy ray in the active energy ray irradiating step include ultraviolet rays, visible rays, and electron beams; and among these, ultraviolet rays (hereinafter, also called "UV") are preferable.

A peak wavelength of the ultraviolet rays is preferably 200 nm to 405 nm, more preferably 220 nm to 390 nm, and still more preferably 220 nm to 380 nm.

The exposure amount of ultraviolet rays is preferably 20 $mJ/cm^2$ to 5 $J/cm^2$ and more preferably 100 $mJ/cm^2$ to 1,500 $mJ/cm^2$. As irradiation conditions and basic irradiation method, irradiation conditions and irradiation method described in JP1985-132767A (JP-S60-132767A) can be adopted. Specifically, the irradiation method is preferably a method of providing a light source on both sides of a head unit including an ink jet device and scanning the substrate by the head unit and the light source by a so-called shuttle method, or a method of irradiating the substrate with another light source that is not involved in driving.

As a light source for ultraviolet irradiation, a mercury lamp, a gas laser, and a solid-state laser are mainly used, and a mercury lamp, a metal halide lamp, and an ultraviolet fluorescent lamp are widely known. In addition, a light emitting diode (UV-LED) and a laser diode (UV-LD) are compact, long-life, highly efficient, and low-cost, and are expected to be used as the light source for ultraviolet irradiation. Among these, a metal halide lamp, a high-pressure mercury lamp, a medium-pressure mercury lamp, a low-pressure mercury lamp, or UV-LED is preferable as the light source for the ultraviolet irradiation.

Among these, in a case where the active energy ray is radiated using a mercury lamp, a content of the polymerization initiator is preferably 3 parts by mass to 15 parts by mass, more preferably 5 parts by mass to 15 parts by mass, and still more preferably 6 parts by mass to 11 parts by mass with respect to 100 parts by mass of the polymerizable liquid crystal compound.

A cooling step may be provided in the middle of the active energy ray irradiating step or before the active energy ray irradiating step.

The cooling method is not particularly limited, and examples thereof include a method of allowing the substrate to stand in an atmosphere at a predetermined temperature, and a method of providing a portion without a heater in a transport

path.

A cooling rate is not particularly limited, but it is preferable to set the cooling rate in order to suitably form the wave-like structure of the bright portion and the dark portion in the cholesteric liquid crystal layer.

Specifically, the maximum value of the cooling rate is preferably 1°C or higher per second, more preferably 2°C or higher per second, and still more preferably 3°C or higher per second. The upper limit value of the cooling rate is not particularly limited, but is usually 10°C or lower per second.

In the manufacturing method of an image recorded material according to the present disclosure, in a case where the cholesteric liquid crystal layer is exposed to wind, unevenness may occur on the surface condition of the formed cholesteric liquid crystal layer. In consideration of this point, a wind speed of the environment to which the cholesteric liquid crystal layer is exposed is preferably 1 m/s or less.

The active energy ray irradiating step may be performed at the same time as the cooling treatment or the substrate heating treatment described above.

Examples

Hereinafter, the present disclosure will be described in more detail using Examples. However, the present disclosure is not limited to the following examples as long as it does not exceed the gist of the present invention.

<Example 1>

[Preparation of ink]

(Ink Rm1)

The following components were heated, completely dissolved, and mixed with each other to prepare an ink Rm1. A viscosity (25°C) of the ink Rm1 was 10 mPa·s, and a surface tension (25°C) was 28 mN/m.

· Diethylene glycol diethyl ether (boiling point: 162°C) ... 65.57 parts by mass
· Mixture of polymerizable liquid crystal compounds ... 30 parts by mass
Polymerization initiator: bis(2,4,6-trimethylbenzoyl)phenylphosphine oxide (product name "Omnirad 819", manufactured by IGM Resins B.V) ... 3.0 parts by mass
· Chiral compound A ... 1.4 parts by mass
· Fluorine-based surfactant (product name "FTERGENT 208G", manufactured by NEOS COMPANY LIMITED) ... 0.03 parts by mass

The mixture of the polymerizable liquid crystal compounds consists of 50% by mass of a compound (10) and 50% by mass of a compound (11). The compounds (10) and (11) are rod-like liquid crystal compounds. Structures of the compound (10), the compound (11), and the chiral compound A are as follows.

(Compound (10) and compound (11))

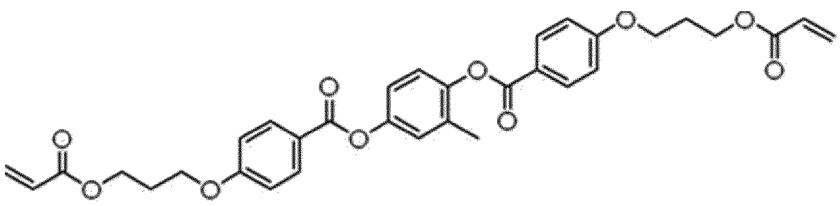

(10)

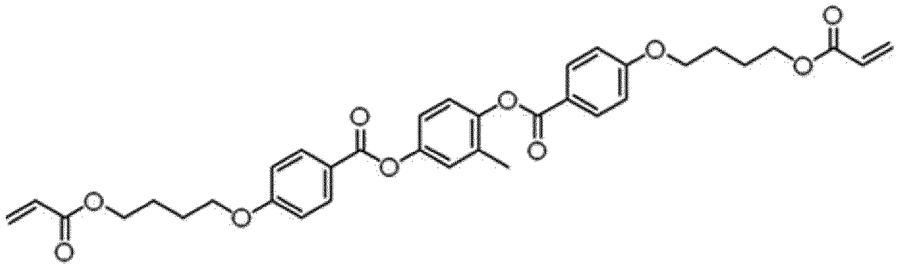

(11)

(Chiral compound A)

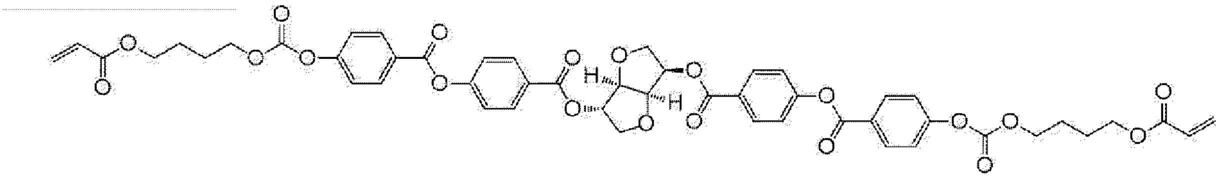

[Color development tone of image (maximal reflection wavelength)]

As a substrate, a PET film with a coating layer (product name "Viewful UV TP-100N", manufactured by KIMOTO) was used. The ink Rm1 was applied onto the substrate with a wire bar so that a wet film thickness was 6 μm. Thereafter, the ink was heated at 80°C for 5 minutes. An image (ink film) was formed by exposing the ink once at 120 W and a transportation speed of 10 m/min, using a metal halide lamp (product name "CSOT-40", manufactured by GS Yuasa International Ltd.). Using a fluorescence spectrophotometer (product name "FD-7", manufactured by Konica Minolta, Inc.), a concealment ratio measurement paper (standard: JIS K 5600-4-1: 1999, (ISO/FDIS 6504-3: 1998), manufactured by TP Giken Co., Ltd.) was placed on a side of the substrate opposite to an image recording surface, and a reflectivity at 380 nm to 730 nm was measured by colorimetry from the image recording surface of the substrate. The maximal reflection wavelength of the ink film formed of the ink Rm1 was 630 nm.

[Production of image recorded material 1]

As a substrate, a PET film with a coating layer (product name "Viewful UV TP-100N", manufactured by KIMOTO) was used. The substrate was heated with a hot plate installed on a stage, and the temperature of the substrate was maintained at 50°C.

Using an ink jet recording device (product name "UJF3042HG", multi-pass method, manufactured by MIMAKI ENGINEERING CO., LTD.), the ink Rm1 was jetted in 32 passes at a resolution of 720 dpi × 600 dpi, and a solid image of 20 mm square with a halftone dot rate of 100% was recorded. Thereafter, the ink was heated at 75°C for 5 minutes. An image recorded material 1 was obtained by exposing the ink at 120 W and a transportation speed of 10 m/min, using a metal halide lamp (product name "CSOT-40", manufactured by GS Yuasa International Ltd.). The thickness of the image (ink film) was 6 μm.

[Production of image recorded material 2]

An image recorded material 2 was obtained in the same manner as the image recorded material 1, except that the image to be recorded was changed as follows.

Image data of a 10 mm square, in which the halftone dot rate was continuously changed from 100% to 45%, was prepared. Using the above-described image data, an image (10 mm × 20 mm; the halftone dot rate in the center was 100% and the halftone dot rate continuously changed to 45% in the left-right direction), in which two images of 10 mm square were line-symmetrically arranged such that a portion having a halftone dot rate of 100% was in the center, was recorded.

[Analysis of image recorded material 1]

The image recorded material 1 was cut in the thickness direction with an ultramicrotome to prepare a cut surface for cross-sectional observation. In a case where the cut surface was observed with SEM (product name "SU8030",

manufactured by Hitachi High-Tech Corporation), a stripe pattern of a bright portion and a dark portion was confirmed. The line indicating the bright portion or the dark portion was a wavy line.

The period length, the maximum value of the amplitude, and the number of discontinuous portions in the wavy line were measured.

The measuring method is as follows.

-Period length-

A cross-sectional observation image was observed in a range of a width of 500 μm in a direction parallel to a main surface of the substrate, an imaginary straight line of the line indicating the bright portion or the dark portion was drawn, and an average of a single period was obtained.

-Maximum value of amplitude-

An imaginary straight line of the line indicating the bright portion or the dark portion was drawn, and a direction perpendicular to the imaginary straight line of the wavy line was defined as an amplitude direction. A distance between a convex portion and a concave portion in the wavy line with respect to the center in the amplitude direction was measured along the amplitude direction.

-Number of discontinuous portions-

The number of discontinuous portions present in the width of 500 μm in the direction parallel to the main surface of the substrate in the cross-sectional observation image was measured.

In Example 1, the period length was 31 μm, the maximum value of the amplitude was 400 nm, and there were 15 discontinuous portions in the width of 500 μm in the direction parallel to the imaginary straight line of the wavy line.

[Analysis of image recorded material 2]

The image recorded material 2 was cut in the thickness direction with an ultramicrotome to prepare a cut surface for cross-sectional observation. The position and direction of cutting were set to a direction perpendicular to a direction in which the halftone dot rate changed at two positions separated from the center of the image recorded material 2 by 5 mm to the left and right, respectively.

In a case where two cut surfaces were observed with SEM (product name "SU8030", manufactured by Hitachi High-Tech Corporation), a stripe pattern of a bright portion and a dark portion was confirmed in the two cut surfaces. The line indicating the bright portion or the dark portion was a wavy line. In addition, since the wavy line was inclined with respect to the main surface of the substrate, an alignment angle was measured. The measuring method is as follows.

-Alignment angle-

An imaginary straight line of the line indicating the bright portion or the dark portion was drawn, and an angle between the main surface of the substrate and the imaginary straight line was measured.

In Example 1, in one cross section of the two cross sections, the line indicating the bright portion or the dark portion had a positive inclination, and in the other cross section, the line indicating the bright portion or the dark portion had a negative inclination. The alignment angles were all 8° to 15°.

<Example 2>

Image recorded materials 1 and 2 were obtained by the same method as in Example 1, except that the ink jet recording device used in Example 1 was changed to an ink jet recording device (product name "DMP-2831", manufactured by FUJIFILM Corporation), and the ink was jetted by a single-pass method.

<Example 3>

Image recorded materials 1 and 2 were obtained by the same method as in Example 1, except that the temperature of the substrate was changed to 60°C, and the jetting amount of the ink was adjusted such that the thickness of the image in the image recorded material 1 was 4 μm.

<Comparative Example 1>

The substrate was changed to a polyester film (product name "TAIKO polyester film FE2001", corona discharge treated-surface type, manufactured by Futamura Chemical Co., Ltd.). Image recorded materials 1 and 2 were obtained by the same method as in Example 3, except that the ink Rm1 was jetted onto the surface that had been subjected to the corona treatment.

In a case where cross sections of the image recorded material 1 and the image recorded material 2 were observed with SEM, the stripe pattern of the bright portion and the dark portion was confirmed; but the line indicating the bright portion or the dark portion was horizontal to the substrate, and a wave-like structure and an inclined structure were not confirmed.

<Comparative Example 2>

The substrate was changed to a polyester film (product name "TAIKO polyester film FE2001", corona discharge treated-surface type, manufactured by Futamura Chemical Co., Ltd.). Image recorded materials 1 and 2 were obtained by the same method as in Example 1, except that a rubbing treatment was performed on a surface which had not been subjected to the corona treatment, and the ink Rm1 was jetted onto the surface which had been subjected to the rubbing treatment.

In a case where cross sections of the image recorded material 1 and the image recorded material 2 were observed with SEM, the stripe pattern of the bright portion and the dark portion was confirmed; but the line indicating the bright portion or the dark portion was horizontal to the substrate, and a wave-like structure and an inclined structure were not confirmed.

<Example 4>

Image recorded materials 1 and 2 were obtained by the same method as in Example 3, except that the substrate was changed to a PET film (product name "Viewful 200TA", manufactured by KIMOTO).

<Example 5>

The substrate was changed to a PET film (product name "MF-100", manufactured by FUJIFILM Corporation). Using an ink jet recording device (product name "UJF3042HG", manufactured by manufactured by MIMAKI ENGINEERING CO., LTD.), a clear ink (product name "LH-100CL", manufactured by MIMAKI ENGINEERING CO., LTD.) was jetted to record a solid image of 20 mm square with a halftone dot rate of 100% in a high density mode at a resolution of 720 dpi × 600 dpi. In addition, image recorded materials 1 and 2 were obtained by the same method as in Example 3 after performing a corona treatment using a corona surface modification evaluation device (product name "TEC-4AX", manufactured by KASUGA DENKI, INC.).

The base layer formed of the clear ink had irregular unevenness on the surface. Therefore, irregular unevenness was also observed on the surface of the image recorded material 1.

<Example 6>

Image recorded materials 1 and 2 were obtained by the same method as in Example 3, except that the substrate was changed to a self-adhesive film (product name "Gelpolyclear 125UV-IJII", manufactured by PANAC Co., Ltd.).

<Example 7>

Image recorded materials 1 and 2 were obtained by the same method as in Example 3, except that the substrate was changed to a PET film (product name "NIJ-TP", manufactured by NITIE, Inc.).

<Example 8>

Image recorded materials 1 and 2 were obtained by the same method as in Example 3, except that the substrate was changed to a flexible transparent conductive film (product name "STARCLEAR", manufactured by Nagaoka Sangyou Co., Ltd.).

<Example 9>

Image recorded materials 1 and 2 were obtained by the same method as in Example 3, except that the temperature of the substrate was changed to 40°C.

<Example 10>

Image recorded materials 1 and 2 were obtained by the same method as in Example 3, except that the temperature of the substrate was changed to 70°C.

<Example 11>

Image recorded materials 1 and 2 were obtained by the same method as in Example 3, except that the number of passes during the printing was changed to 4.

<Example 12>

Image recorded materials 1 and 2 were obtained by the same method as in Example 3, except that the number of passes during the printing was changed to 16.

<Example 13>

Image recorded materials 1 and 2 were obtained by the same method as in Example 3, except that a UV-LED lamp equipped to the ink jet recording device was used instead of the metal halide lamp.

<Example 14>

Image recorded materials 1 and 2 were obtained by the same method as in Example 3, except that a low-pressure mercury lamp was used instead of the metal halide lamp, and the surface was cured over time until the stickiness was eliminated.

<Example 15>

Image recorded materials 1 and 2 were obtained by the same method as in Example 3, except that methoxybutyl acetate was used instead of diethylene glycol diethyl ether in the ink Rm1.

<Example 16>

[Preparation of ink]

(Ink Rm2)

The following components were completely dissolved and mixed with each other to prepare an ink Rm2. A viscosity (25°C) of the ink Rm2 was 10 mPa·s, and a surface tension (25°C) was 29.5 mN/m.

· Diethylene glycol diethyl ether ... 65.598 parts by mass
· Mixture of polymerizable liquid crystal compounds ... 30 parts by mass
Polymerization initiator: bis(2,4,6-trimethylbenzoyl)phenylphosphine oxide (product name "Omnirad 819", manufactured by IGM Resins B.V) ... 3.0 parts by mass
· Chiral compound A ... 1.4 parts by mass
· Fluorine-based surfactant (product name "FTERGENT 208G", manufactured by NEOS COMPANY LIMITED) ... 0.002 parts by mass

Image recorded materials 1 and 2 were obtained by the same method as in Example 3, except that the ink Rm2 was used instead of the ink Rm 1.

<Example 17>

[Preparation of ink]

(Ink Rm3)

The following components were completely dissolved and mixed with each other to prepare an ink Rm3. A viscosity (25°C) of the ink Rm3 was 10 mPa·s, and a surface tension (25°C) was 28.7 mN/m.

· Diethylene glycol diethyl ether ... 65.59 parts by mass
· Mixture of polymerizable liquid crystal compounds ... 30 parts by mass
Polymerization initiator: bis(2,4,6-trimethylbenzoyl)phenylphosphine oxide (product name "Omnirad 819", manufactured by IGM Resins B.V) ... 3.0 parts by mass
· Chiral compound A ... 1.4 parts by mass
· Fluorine-based surfactant (product name "FTERGENT 208G", manufactured by NEOS COMPANY LIMITED) ... 0.01 parts by mass

Image recorded materials 1 and 2 were obtained by the same method as in Example 3, except that the ink Rm3 was used instead of the ink Rm 1.

<Example 18>

[Preparation of ink]

(Ink Rm4)

The following components were completely dissolved and mixed with each other to prepare an ink Rm4. A viscosity (25°C) of the ink Rm4 was 10 mPa·s, and a surface tension (25°C) was 26.6 mN/m.

· Diethylene glycol diethyl ether ... 65.5 parts by mass
· Mixture of polymerizable liquid crystal compounds ... 30 parts by mass
Polymerization initiator: bis(2,4,6-trimethylbenzoyl)phenylphosphine oxide (product name "Omnirad 819", manufactured by IGM Resins B.V) ... 3.0 parts by mass
· Chiral compound A ... 1.4 parts by mass
· Fluorine-based surfactant (product name "FTERGENT 208G", manufactured by NEOS COMPANY LIMITED) ... 0.1 parts by mass

Image recorded materials 1 and 2 were obtained by the same method as in Example 3, except that the ink Rm4 was used instead of the ink Rm 1.

<Example 19>

[Preparation of ink]

(Ink Rm5)

The following components were completely dissolved and mixed with each other to prepare an ink Rm5. A viscosity (25°C) of the ink composition Rm5 was 10 mPa·s, and a surface tension (25°C) was 25.2 mN/m.

· Diethylene glycol diethyl ether ... 65.35 parts by mass
· Mixture of polymerizable liquid crystal compounds ... 30 parts by mass
Polymerization initiator: bis(2,4,6-trimethylbenzoyl)phenylphosphine oxide (product name "Omnirad 819", manufactured by IGM Resins B.V) ... 3.0 parts by mass
· Chiral compound A ... 1.4 parts by mass
· Fluorine-based surfactant (product name "FTERGENT 208G", manufactured by NEOS COMPANY LIMITED) ... 0.25 parts by mass

Image recorded materials 1 and 2 were obtained by the same method as in Example 3, except that the ink Rm5 was used instead of the ink Rm 1.

<Example 20>

(Ink Rm1)

An ink Rm1 was prepared by the same method as in Example 1.

(Ink Bm1)

The following components were completely dissolved and mixed with each other to prepare an ink Bm1. A viscosity (25°C) of the ink Bm1 was 10 mPa·s, and a surface tension (25°C) was 28 mN/m.

· Diethylene glycol diethyl ether ... 64.97 parts by mass
· Mixture of polymerizable liquid crystal compounds ... 30 parts by mass
Polymerization initiator: bis(2,4,6-trimethylbenzoyl)phenylphosphine oxide (product name "Omnirad 819", manufactured by IGM Resins B.V) ... 3 parts by mass
· Chiral compound A ... 2 parts by mass
· Fluorine-based surfactant (product name "FTERGENT 208G", manufactured by NEOS COMPANY LIMITED) ... 0.03 parts by mass

As a substrate, a PET film with a coating layer (product name "Viewful UV TP-100N", manufactured by KIMOTO) was used. The ink Bm1 was applied onto the substrate with a wire bar so that a wet film thickness was 6 μm. Thereafter, the ink was heated at 80°C for 5 minutes. An image (ink film) was formed by exposing the ink once at 120 W and a transportation speed of 10 m/min, using a metal halide lamp (product name "CSOT-40", manufactured by GS Yuasa International Ltd.). Using a fluorescence spectrophotometer (product name "FD-7", manufactured by Konica Minolta, Inc.), a concealment ratio measurement paper (standard: JIS K 5600-4-1: 1999, (ISO/FDIS 6504-3: 1998), manufactured by TP Giken Co., Ltd.) was placed on a position of the substrate opposite to an image recording surface, and a reflectivity in a range of 380 nm to 730 nm was measured from the image recording surface of the substrate. The maximal reflection wavelength of the ink film formed of the ink Bm1 was 440 nm.
A color difference between the ink film formed of the ink Rm1 and the ink film formed of the ink Bm1 was 37.

[Production of image recorded material 3]

Image data of a 20 mm square was prepared with a halftone dot rate in which the concentration of the ink Bm1 was 70% and the concentration of the ink Rm1 was 70%.
As a substrate, a PET film with a coating layer (product name "Viewful UV TP-100N", manufactured by KIMOTO) was used. The substrate was heated with a hot plate installed on a stage, and the temperature of the substrate was maintained at 60°C.
Using an ink jet recording device (product name "UJF3042HG", multi-pass method, manufactured by MIMAKI ENGINEERING CO., LTD.), the ink Bm1 and the ink Rm1 were jetted in 32 passes at a resolution of 720 dpi × 600 dpi to record an image. Thereafter, the ink was heated at 75°C for 5 minutes. An image recorded material 3 was obtained by exposing the inks at 120 W and a transportation speed of 10 m/min, using a metal halide lamp (product name "CSOT-40", manufactured by GS Yuasa International Ltd.). The thickness of the image (ink film) was 6 μm.

[Production of image recorded material 4]

An image recorded material 4 was obtained in the same manner as the image recorded material 3, except that the image to be recorded was changed as follows.
For the ink Rm1, image data of a 20 mm square was prepared in which the central halftone dot rate was set to 100% and continuously changed to 45% in the left-right direction from the center; and for the ink Bm1, image data of a 20 mm square was prepared in which the halftone dot rate was set to 40%. An image (20 mm × 20 mm) was recorded using the above-described image data.

<Example 21>

(Ink Rm1)

An ink Rm1 was prepared by the same method as in Example 1.

(Ink Gm1)

The following components were completely dissolved and mixed with each other to prepare an ink Gm1. A viscosity (25°C) of the ink Gm1 was 10 mPa·s, and a surface tension (25°C) was 28 mN/m.

· Diethylene glycol diethyl ether ... 65.22 parts by mass
· Mixture of polymerizable liquid crystal compounds ... 30 parts by mass
Polymerization initiator: bis(2,4,6-trimethylbenzoyl)phenylphosphine oxide (product name "Omnirad 819", manufactured by IGM Resins B.V) ... 3.0 parts by mass
· Chiral compound A... 1.75 parts by mass
· Fluorine-based surfactant (product name "FTERGENT 208G", manufactured by NEOS COMPANY LIMITED) ... 0.03 parts by mass

[Color development tone of image (maximal reflection wavelength)]

As a substrate, a PET film with a coating layer (product name "Viewful UV TP-100N", manufactured by KIMOTO) was used. The ink Gm1 was applied onto the substrate with a wire bar so that a wet film thickness was 6 μm. Thereafter, the ink was heated at 80°C for 5 minutes. An image (ink film) was formed by exposing the ink once at 120 W and a transportation speed of 10 m/min, using a metal halide lamp (product name "CSOT-40", manufactured by GS Yuasa International Ltd.). Using a fluorescence spectrophotometer (product name "FD-7", manufactured by Konica Minolta, Inc.), a concealment ratio measurement paper (standard: JIS K 5600-4-1: 1999, (ISO/FDIS 6504-3: 1998), manufactured by TP Giken Co., Ltd.) was placed on a side of the substrate opposite to an image recording surface, and a reflectivity at 380 nm to 730 nm was measured by colorimetry from the image recording surface of the substrate. The maximal reflection wavelength of the ink film formed of the ink Gm1 was 540 nm.
A color difference between the ink film formed of the ink Rm1 and the ink film formed of the ink Gm1 was 36.

[Production of image recorded materials 3 and 4]

Image recorded materials 3 and 4 were obtained by the same method as in Example 20, except that the ink Gm1 was used instead of the ink Bm1.
In Examples 2 to 19, the image recorded materials 1 and 2 were analyzed in the same manner as in the analysis of the image recorded materials 1 and 2 in Example 1.
In Example 20 and Example 21, the image recorded materials 3 and 4 were analyzed in the same manner as the image recorded materials 1 and 2 in Example 1.
In addition, in Examples 1 to 19, the color developability was evaluated using the image recorded material 1, and the stereoscopic effect was evaluated using the image recorded material 2. In Example 20 and Example 21, the color developability was evaluated using the image recorded material 3, and the stereoscopic effect was evaluated using the image recorded material 4. The evaluation methods were as follows.

<Color developability>

An integrating sphere unit was attached to a spectrophotometer (product name "V-770", manufactured by JASCO Corporation), and a reflectivity of a total reflection component was measured with the image recording surface of the image recorded material 1 or the image recorded material 3, facing the light source. In addition, a specular reflection component removal unit was attached thereto, and a reflectivity of a diffuse reflection component was measured.
The color developability was evaluated based on a proportion of the reflectivity of the diffuse reflection component (the maximum value of the reflectivity in a range of 400 nm to 800 nm - the minimum value of the reflectivity) to the reflectivity of the total reflection component (the maximum value of the reflectivity in the range of 400 nm to 800 nm - the minimum value of the reflectivity). The evaluation standard was as follows. In A, there was no unevenness, and a vivid color was exhibited.

A: the proportion was 60% or more.
B: the proportion was less than 60%.

<Stereoscopic effect>

A light source was placed above the image recording surface of the image recorded material 2 or the image recorded material 4. The image recording surface was visually observed from a direction of 45° with respect to a normal

direction, in which the thickness direction of the image recording surface was the normal direction. The evaluation of the stereoscopic effect was performed based on a difference in brightness between the right half and the left half of the image recording surface, and a magnitude of the color change in the entire image recorded material. In a case where the brightness and the color change were large, the stereoscopic effect was excellent.

A: the difference in brightness and darkness and the color change were very large and clear.
B: the difference in brightness and darkness and the color change were large.
C: the difference in brightness and darkness and the color change were small.
D: the brightness and color change could not be confirmed.

The evaluation results are shown in Tables 1 to 4.

[Table 1]

| | | Example 1 | Example 2 | Example 3 | Comparative Example 1 | Comparative Example 2 |
|---|---|---|---|---|---|---|
| Unevenness of surface | | None | None | None | None | None |
| Number of passes | | 32 | - | 32 | 32 | 32 |
| Thickness of image (μm) | | 6 | 6 | 4 | 4 | 4 |
| Temperature of substrate (°C) | | 50 | 50 | 60 | 60 | 60 |
| Printing method | | Multi-pass | Single-pass | Multi-pass | Multi-pass | Multi-pass |
| Period length (μm) | | 31 | 15 | 30 | - | - |
| Maximum value of amplitude (nm) | | 400 | 1200 | 300 | - | - |
| Number of discontinuous portions | | 15 | 50 | 4 | 5 | 5 |
| Alignment angle (°) | | 5 to 10 | 4 to 8 | 8 to 15 | 0 to 3 | 0 to 3 |
| Evaluation | Color developability | B | C | A | D | D |
| | Stereoscopic effect | B | C | A | D | D |

[Table 2]

| | Example 4 | Example 5 | Example 6 | Example 7 | Example 8 | Example 9 |
|---|---|---|---|---|---|---|
| Unevenness of surface | None | Slightly | None | None | None | None |
| Number of passes | 32 | 32 | 32 | 32 | 32 | 32 |
| Thickness of image (μm) | 4 | 4 | 4 | 4 | 4 | 4 |
| Temperature of substrate (°C) | 60 | 60 | 60 | 60 | 60 | 40 |
| Printing method | Multi-pass | Multi-pass | Multi-pass | Multi-pass | Multi-pass | Multi-pass |
| Period length (μm) | 30 | 15 | 50 | 40 | 20 | 500 |
| Maximum value of amplitude (nm) | 300 | 800 | 400 | 300 | 800 | 1500 |
| Number of discontinuous portions | 6 | 40 | 8 | 5 | 30 | 50 |
| Alignment angle (°) | 7 to 13 | 3 to 10 | 7 to 13 | 8 to 15 | 5 to 10 | 4 to 8 |

(continued)

| | | Example 4 | Example 5 | Example 6 | Example 7 | Example 8 | Example 9 |
|---|---|---|---|---|---|---|---|
| Evaluation | Color developability | A | B | A | A | C | C |
| | Stereoscopic effect | A | B | A | A | B | C |

[Table 3]

| | | Example 10 | Example 11 | Example 12 | Example 13 | Example 14 | Example 15 |
|---|---|---|---|---|---|---|---|
| Unevenness of surface | | None | None | None | None | None | None |
| Number of passes | | 32 | 4 | 16 | 32 | 32 | 32 |
| Thickness of image (μm) | | 4 | 4 | 4 | 4 | 4 | 4 |
| Temperature of substrate (°C) | | 70 | 60 | 60 | 60 | 60 | 60 |
| Printing method | | Multi-pass | Multi-pass | Multi-pass | Multi-pass | Multi-pass | Multi-pass |
| Period length (μm) | | 25 | 800 | 130 | 40 | 40 | 35 |
| Maximum value of amplitude (nm) | | 300 | 900 | 800 | 300 | 300 | 400 |
| Number of discontinuous portions | | 1 | 60 | 30 | 12 | 6 | 4 |
| Alignment angle (°) | | 8 to 15 | 4 to 8 | 5 to 10 | 8 to 15 | 7 to 13 | 8 to 15 |
| Evaluation | Color developability | A | C | B | A | A | A |
| | Stereoscopic effect | A | C | B | A | A | A |

[Table 4]

| | | Example 16 | Example 17 | Example 18 | Example 19 | Example 20 | Example 21 |
|---|---|---|---|---|---|---|---|
| Unevenness of surface | | None | None | None | None | None | None |
| Number of passes | | 32 | 32 | 32 | 32 | 32 | 32 |
| Thickness of image (μm) | | 4 | 4 | 4 | 4 | 6 | 6 |
| Temperature of substrate (°C) | | 60 | 60 | 60 | 60 | 60 | 60 |
| Printing method | | Multi-pass | Multi-pass | Multi-pass | Multi-pass | Multi-pass | Multi-pass |
| Period length (μm) | | 20 | 50 | 100 | 300 | 50 | 50 |
| Maximum value of amplitude (nm) | | 1500 | 300 | 800 | 150 | 300 | 300 |
| Number of discontinuous portions | | 28 | 10 | 25 | 50 | 6 | 8 |
| Alignment angle (°) | | 4 to 8 | 5 to 10 | 5 to 10 | 2 to 5 | 7 to 13 | 7 to 13 |
| Evaluation | Color developability | C | B | B | C | A | A |
| | Stereoscopic effect | C | B | B | C | A | A |

As shown in Tables 1 to 4, in Examples 1 to 21, it was found that, since the substrate and the ink jet image disposed on the substrate were included, the ink jet image included the cholesteric liquid crystal layer, the cholesteric liquid crystal layer had a stripe pattern of a bright portion and a dark portion observed with SEM in the cross section along the thickness direction of the ink jet image, and at least a part of the line indicating the bright portion or the dark portion was the wavy line, an image having excellent color developability and a stereoscopic effect was obtained.
On the other hand, in Comparative Examples 1 and 2, the wave-like structure and the inclined structure were not confirmed in the stripe pattern of the bright portion and the dark portion observed with SEM in the cross section along the thickness direction of the image, and thus an image having high designability was not obtained.

<Example 22>

[Preparation of ink]

(Ink Rm6)

The following components were completely dissolved and mixed with each other to prepare an ink Rm6. A viscosity (25°C) of the ink Rm6 was 11 mPa·s, and a surface tension (25°C) was 28.5 mN/m.

· Butoxyl ... 63.07 parts by mass
· Mixture of polymerizable liquid crystal compounds ... 34 parts by mass
Polymerization initiator: bis(2,4,6-trimethylbenzoyl)phenylphosphine oxide (product name "Omnirad 819", manufactured by IGM Resins B.V) ... 1.5 parts by mass
· Chiral compound A ... 1.4 parts by mass
· Fluorine-based surfactant (product name "FTERGENT 208G", manufactured by NEOS COMPANY LIMITED) ... 0.03 parts by mass

Image recorded materials 1 and 2 were obtained by the same method as in Example 3, except that the ink Rm6 was used instead of the ink Rm 1.

<Example 23>

(Ink Rm7)

The following components were completely dissolved and mixed with each other to prepare an ink Rm7. A viscosity (25°C) of the ink Rm7 was 10.2 mPa·s, and a surface tension (25°C) was 27.5 mN/m.

· Diethylene glycol diethyl ether ... 65.67 parts by mass
· Mixture of polymerizable liquid crystal compounds ... 30 parts by mass
Polymerization initiator: bis(2,4,6-trimethylbenzoyl)phenylphosphine oxide (product name "Omnirad 819", manufactured by IGM Resins B.V) ... 3 parts by mass
· Chiral compound A ... 1.3 parts by mass
· Fluorine-based surfactant (product name "FTERGENT 208G", manufactured by NEOS COMPANY LIMITED) ... 0.03 parts by mass

[Production of image recorded material 1]

As a substrate, a PET film with a coating layer (product name "Viewful UV TP-100N", manufactured by KIMOTO) was used. The substrate was heated with a hot plate installed on a stage, and the temperature of the substrate was maintained at 60°C.
Using an ink jet recording device (product name "UJF3042HG", multi-pass method, manufactured by MIMAKI ENGINEERING CO., LTD.), the ink Rm7 was jetted in 32 passes at a resolution of 720 dpi × 600 dpi, and a solid image of 20 mm square with a halftone dot rate of 100% was recorded. Thereafter, the ink was heated at 70°C for 5 minutes. The ink was exposed using a low-pressure mercury lamp such that the integrated exposure amount was 1,000 mJ/cm$^2$, thereby obtaining an image recorded material 1. The thickness of the image (ink film) was 4 μm.

[Production of image recorded material 2]

An image recorded material 2 was obtained in the same manner as the image recorded material 1, except that the

image to be recorded was changed as follows.

Image data of a 10 mm square, in which the halftone dot rate was continuously changed from 100% to 45%, was prepared. Using the above-described image data, an image (10 mm × 20 mm; the halftone dot rate in the center was 100% and the halftone dot rate continuously changed to 45% in the left-right direction), in which two images of 10 mm square were line-symmetrically arranged such that a portion having a halftone dot rate of 100% was in the center, was recorded.

The reflection spectrum of the image recorded material 1 was measured with a fluorescence spectrophotometer FD-7 (manufactured by Konica Minolta, Inc.), and as a result of examining the maximum wavelength at which the reflectivity value was 0.01 or less, it was 600 nm. The wavelength at which the reflectivity was maximized was 680 nm.

<Example 24>

(Ink Rm8)

The following components were completely dissolved and mixed with each other to prepare an ink Rm7. A viscosity (25°C) of the ink Rm7 was 10.5 mPa·s, and a surface tension (25°C) was 27.6 mN/m.

· Diethylene glycol diethyl ether ... 65.67 parts by mass
· Mixture of polymerizable liquid crystal compounds ... 30 parts by mass
Polymerization initiator: bis(2,4,6-trimethylbenzoyl)phenylphosphine oxide (product name "Omnirad 819", manufactured by IGM Resins B.V) ... 2 parts by mass
· Polymerization initiator: 2-hydroxy-4'-(2-hydroxyethoxy)-2-methylpropiophenone (product name "Omnirad 2959, manufactured by IGM Resins B.V") ... 1 part by mass
· Chiral compound A ... 1.3 parts by mass
· Fluorine-based surfactant (product name "FTERGENT 208G", manufactured by NEOS COMPANY LIMITED) ... 0.03 parts by mass

Image recorded materials 1 and 2 were produced by the same method as in Example 23, except that the ink Rm8 was used instead of the ink Rm7. The reflection spectrum of the image recorded material 1 was measured with a fluorescence spectrophotometer FD-7 (manufactured by Konica Minolta, Inc.), and as a result of examining the maximum wavelength at which the reflectivity value was 0.01 or less, it was 600 nm. The wavelength at which the reflectivity was maximized was 680 nm.

<Example 25>

(Ink Rm9)

The following components were completely dissolved and mixed with each other to prepare an ink Rm9. A viscosity (25°C) of the ink Rm9 was 10.3 mPa·s, and a surface tension (25°C) was 27.6 mN/m.

· Diethylene glycol diethyl ether ... 67.17 parts by mass
· Mixture of polymerizable liquid crystal compounds ... 30 parts by mass
Polymerization initiator: bis(2,4,6-trimethylbenzoyl)phenylphosphine oxide (product name "Omnirad 819", manufactured by IGM Resins B.V) ... 1.5 parts by mass
· Chiral compound A ... 1.3 parts by mass
· Fluorine-based surfactant (product name "FTERGENT 208G", manufactured by NEOS COMPANY LIMITED) ... 0.03 parts by mass

Image recorded materials 1 and 2 were obtained by the same method as in Example 23, except that the ink Rm8 was used instead of the ink Rm6. The reflection spectrum of the image recorded material 1 was measured with a fluorescence spectrophotometer FD-7 (manufactured by Konica Minolta, Inc.), and as a result of examining the maximum wavelength at which the reflectivity was 0.01 or less, it was 450 nm. The wavelength at which the reflectivity was maximized was 680 nm.

In a case where the image recorded materials 1 of Examples 23 to 25 were visually compared, the image recorded materials 1 of Example 23 and Example 24 exhibited a bright red color, but the image recorded material 1 of Example 25 exhibited a slightly reduced redness.

<Example 26>

A PET film was produced in the same manner as the PET film described in paragraphs [0142] to [0145] and [0154] to [0158] of JP2011-184488A.

· Polyurethane resin (non-yellowing isocyanate ester-based) (product name "SUPERFLEX 210", manufactured by DKS Co., Ltd., solid content: 33% by mass) 16.8 g
· Crosslinking agent (product name "EPOCROS WS-700", oxazoline-containing polymer, manufactured by Nippon Shokubai Co., Ltd., solid content: 25% by mass) 4.2 g
· 1% by mass of aqueous ammonia2.0 g
· Colloidal silica (product name "Quartron PL-3", manufactured by Fuso Chemical Industry Co., Ltd., solid content: 20% by mass) 0.42 g
· Pure water 76.6 g

The above components were mixed to obtain an easy adhesive composition.
The obtained easy adhesive composition was applied to the PET film with a bar coater (#6) so that the thickness after drying was 350 nm. Thereafter, the PET film was put into a hot air dryer (140°C), and the easy adhesive composition was dried for approximately 5 minutes to form an easy adhesion layer (0.3 μm to 0.5 μm).
An image was recorded on the above-described easy adhesion layer in the same manner as in Example 3, thereby obtaining image recorded materials 1 and 2.

<Example 27>

A composition for an undercoat was prepared by mixing the components shown below. A solid image was formed on a corona-treated surface of polycarbonate, which had been subjected to a corona treatment, using an ink jet recording device (product name "DMP-2850", manufactured by FUJIFILM Corporation). An image was recorded on the solid image in the same manner as in Example 3, thereby obtaining image recorded materials 1 and 2.

· Distilled water ... 97 parts
· Polyvinyl alcohol (degree of polymerization: 1,000) ... 3 parts by mass

The evaluation results are shown in Tables 5 and 6.

[Table 5]

| | | Example 3 | Example 22 | Example 26 | Example 27 |
|---|---|---|---|---|---|
| Unevenness of surface | | None | None | None | Present |
| Number of passes | | 32 | 32 | 32 | 32 |
| Thickness of image (μm) | | 4 | 4 | 4 | 4 |
| Temperature of substrate (°C) | | 60 | 60 | 60 | 60 |
| Printing method | | Multi-pass | Multi-pass | Multi-pass | Multi-pass |
| Surface tension of ink (mN/m) | | 28 | 28 | 28 | 28 |
| Surface energy of substrate (mN/m) | | 47 | 47 | 46 | 50 |
| Period length (μm) | | 30 | 50 | 30 | 500 |
| Maximum value of amplitude (nm) | | 300 | 300 | 300 | 1500 |
| Number of discontinuous portions | | 4 | 6 | 4 | 50 |
| Alignment angle (°) | | 8 to 15 | 8 to 15 | 8 to 15 | 4 to 8 |
| Evaluation | Color developability | A | A | A | C |
| | Stereoscopic effect | A | A | A | C |

[Table 6]

| | | Example 23 | Example 24 | Example 25 |
|---|---|---|---|---|
| Unevenness of surface | | None | None | None |
| Number of passes | | 32 | 32 | 32 |
| Thickness of image (μm) | | 4 | 4 | 4 |
| Temperature of substrate (°C) | | 60 | 60 | 60 |
| Printing method | | Multi-pass | Multi-pass | Multi-pass |
| Surface tension of ink (mN/m) | | 28 | 28 | 28 |
| Surface energy of substrate (mN/m) | | 47 | 47 | 47 |
| Period length (μm) | | 60 | 60 | 60 |
| Maximum value of amplitude (nm) | | 600 | 600 | 600 |
| Number of discontinuous portions | | 8 | 8 | 15 |
| Alignment angle (°) | | 5 to 15 | 5 to 15 | 5 to 15 |
| Evaluation | Color developability | A | A | A |
| | Stereoscopic effect | A | A | A |
| Maximum wavelength at which reflectivity is 0.01 or less | | 600 | 600 | 450 |
| Wavelength at which reflectivity is maximized | | 680 | 680 | 680 |

<Example 28>

An image was recorded by the same method as in Example 3, except that the curing light source was changed to an LED light source having a peak wavelength of 385 nm, thereby obtaining image recorded materials 1 and 2.
Evaluation results of the color developability and the stereoscopic effect were the same as those in Example 3.

<Example 29>

A commercially available double-sided pressure-sensitive adhesive sheet OCA50 (refractive index of pressure-sensitive adhesive layer: 1.477) was bonded to the image recorded material 1 (average refractive index of image-recording layer: 1.6) produced in Example 3.
Evaluation results of the color developability and the stereoscopic effect were the same as those in Example 3.
In a case where the image recorded material obtained in Example 29 was visually observed, graininess was reduced and image quality was improved as compared with the image recorded material 1 produced in Example 3.

<Example 30>

A solid image was recorded on the image recorded material 1 (average refractive index of image-recording layer: 1.6) produced in Example 3 using ink (product name "LH-100CL", manufactured by MIMAKI ENGINEERING CO., LTD.) and image data with a 100% halftone dot rate. The average refractive index of the solid image layer was 1.55.
Evaluation results of the color developability and the stereoscopic effect were the same as those in Example 3.
In a case where the image recorded material obtained in Example 30 was visually observed, graininess was further reduced and image quality was further improved as compared with the image recorded material obtained in Example 29.

<Example 31>

A laminated film (product name "Graphical Long-term UV Fluorine Laminate Gloss GSL-6148", manufactured by Lintec Corporation) was bonded to the image recorded material 1 produced in Example 3.
In a case where the appearance and color of the obtained image recorded material were visually observed, it was confirmed that there was no change in the image recorded material 1 produced in Example 3 and there was no problem in practical use.

<Example 32>

A laminated film (product name "3M (registered trademark) Scotchal (registered trademark) overlaminate film IJ4116N outdoor long-term gloss, manufactured by 3M Company) was bonded to the image recorded material 1 produced in Example 3.

In a case where the appearance and color of the obtained image recorded material were visually observed, it was confirmed that there was no change in the image recorded material 1 produced in Example 3 and there was no problem in practical use.

<Example 33>

(Production of laminated glass)

-Laminated glass A-

The image recorded material produced in Example 3 was disposed on a glass plate having a length of 50 mm, a width of 50 mm, and a thickness of 2 mm such that a surface of the image recorded material opposite to the image recording surface was in contact with the glass plate at a central portion of the glass plate. A laminated glass interlayer film (product name "S-LEC film", PVB film, manufactured by Sekisui Chemical Co., Ltd.; length: 50 mm, width: 50 mm, thickness: 0.38 mm) was disposed on the image recording surface of the image recorded material sample A. Furthermore, a glass plate having a length of 50 mm, a width of 50 mm, and a thickness of 2 mm was disposed on the laminated glass interlayer film.

The laminate was held at 110°C and 10 kPa (0.1 atm) for 1 hour, and then heated in an autoclave (manufactured by Kurihara Seisakusho, K.K.) at 130°C and 1.3 MPa (13 atm) for 20 minutes to remove air bubbles, thereby obtaining a laminated glass A.

-Laminated glass-

A laminated glass B was obtained by the same method as that for the production of the laminated glass A, except that, in the production of the laminated glass B, the laminated glass interlayer film (product name "S-LEC film", PVB film, manufactured by Sekisui Chemical Co., Ltd.; length: 50 mm, width: 50 mm, thickness: 0.38 mm) was disposed on the back surface of the printed surface.

It was found that there was no change in appearance of the image in any of the laminated glasses A and B.

The disclosure of JP2022-099947 filed on June 21, 2022 and the disclosure of JP2023-034111 filed on March 6, 2023 are incorporated in the present specification by reference. In addition, all documents, patent applications, and technical standards described in the present specification are incorporated herein by reference to the same extent as in a case of being specifically and individually noted that individual documents, patent applications, and technical standards are incorporated by reference.

## Claims

**1.** An image recorded material comprising:

a substrate; and
an ink jet image disposed on the substrate,
wherein the ink jet image includes a cholesteric liquid crystal layer,
the cholesteric liquid crystal layer has a stripe pattern of a bright portion and a dark portion observed with a scanning electron microscope in a cross section along a thickness direction of the ink jet image, and
at least a part of a line indicating the bright portion or the dark portion is a wavy line.

**2.** The image recorded material according to claim 1,
wherein a wave period length of the line indicating the bright portion or the dark portion is from 5 μm to 125 μm.

**3.** The image recorded material according to claim 1 or 2,
wherein, in the line indicating the bright portion or the dark portion, a maximum value of an amplitude in a direction perpendicular to an imaginary straight line of the line indicating the bright portion or the dark portion is from 100 nm to 1000 nm.

4. The image recorded material according to claim 1 or 2, wherein, in a case where an angle between an imaginary straight line of the line indicating the bright portion or the dark portion and a main surface of the substrate is defined as an alignment angle, the cholesteric liquid crystal layer includes a region where the alignment angle is 5° or more.

5. The image recorded material according to claim 1 or 2, wherein the image recorded material is a decorative sheet.

6. The image recorded material according to claim 1 or 2, wherein a base layer is disposed between the substrate and the ink jet image.

7. A manufacturing method of an image recorded material, comprising:

   a step of preparing an ink containing a solvent having a boiling point of 100°C or higher and lower than 300°C, a polymerizable liquid crystal compound, a chiral compound, a polymerization initiator, and a surfactant;
   a step of heating a substrate to 45°C or higher;
   a step of applying the ink onto the heated substrate by an ink jet recording method;
   a step of heating the applied ink; and
   a step of irradiating the applied ink with an active energy ray.

8. The manufacturing method of an image recorded material according to claim 7,

   wherein, in the step of preparing the ink, two or more kinds of inks are prepared,
   in the step of applying the ink, a mixed region where the two or more kinds of inks are mixed with each other by the application is formed on at least a part of the substrate, and
   in a case where the two or more kinds of inks are each formed into an ink film, a color difference between two ink films is 25 or more.

9. The manufacturing method of an image recorded material according to claim 7 or 8, wherein, in the step of applying the ink, the ink is applied by a multi-pass method.

10. The manufacturing method of an image recorded material according to claim 7 or 8,

   wherein the active energy ray is radiated using a mercury lamp, and
   a content of the polymerization initiator is 6 parts by mass to 15 parts by mass with respect to 100 parts by mass of the polymerizable liquid crystal compound.

11. A decorative molded body comprising: a molded product of the image recorded material according to claim 5.

FIG. 1

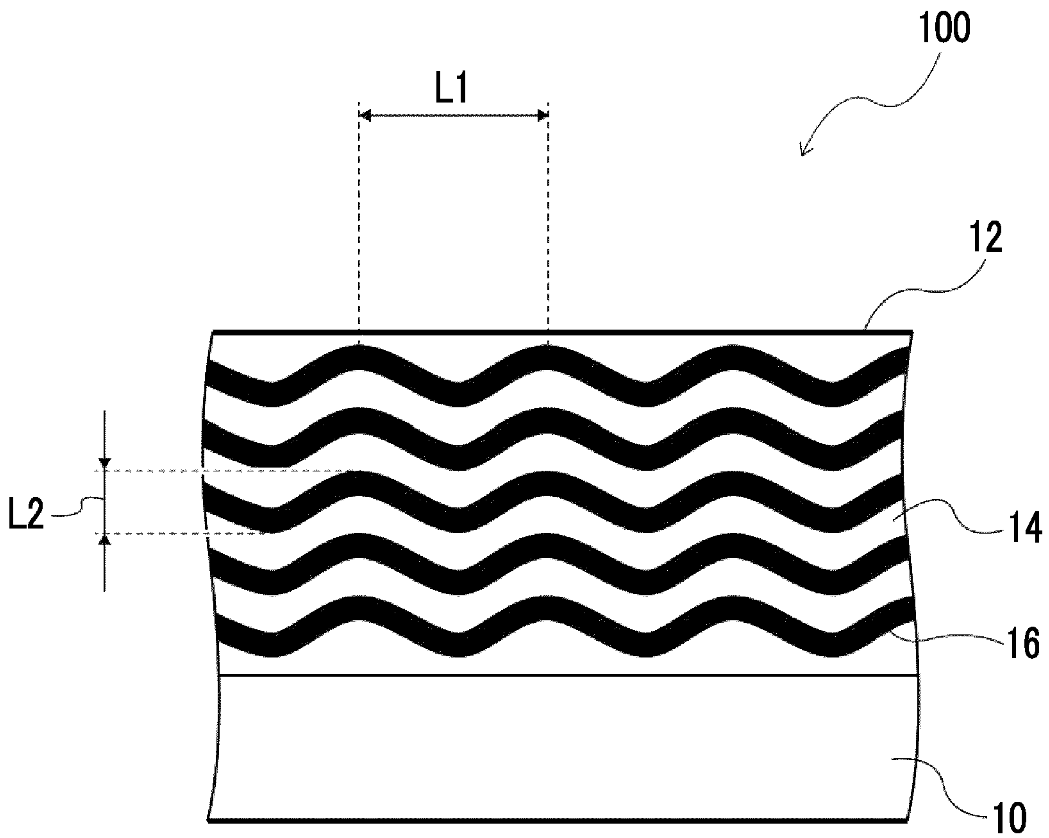

FIG. 2

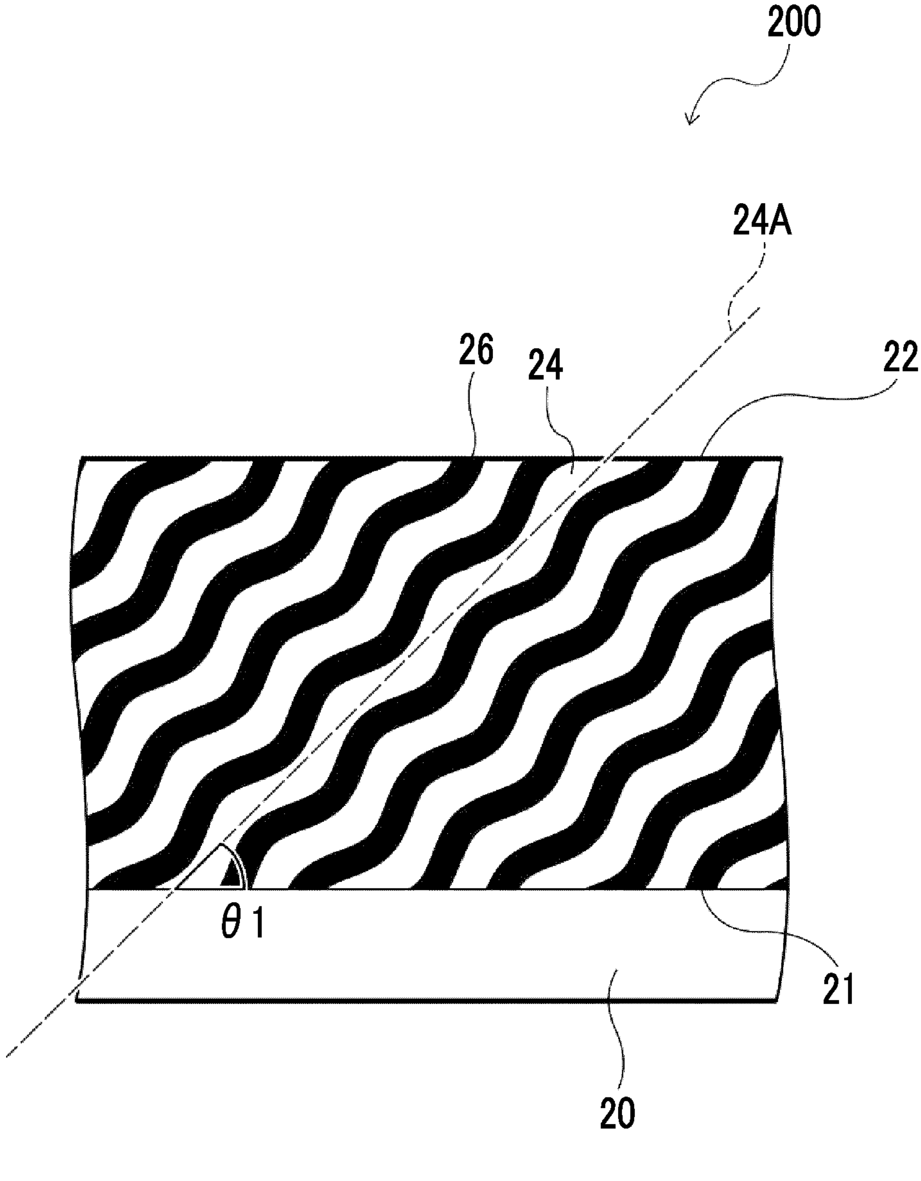

**INTERNATIONAL SEARCH REPORT**

International application No. **PCT/JP2023/019818**

**A. CLASSIFICATION OF SUBJECT MATTER**

***G02B 5/30***(2006.01)i; ***B05D 1/26***(2006.01)i; ***B05D 3/02***(2006.01)i; ***B05D 3/06***(2006.01)i; ***B05D 7/24***(2006.01)i; ***B41J 2/01***(2006.01)i; ***B41M 3/00***(2006.01)i; ***B41M 5/00***(2006.01)i; ***B44C 1/17***(2006.01)i; ***C09D 11/101***(2014.01)i; ***C09D 11/30***(2014.01)i; ***C09D 11/38***(2014.01)i; ***G02B 5/26***(2006.01)i; ***G02B 5/28***(2006.01)i

FI: G02B5/30; B05D1/26 Z; B05D3/02 B; B05D3/06 C; B05D7/24 301M; B41J2/01 125; B41J2/01 129; B41J2/01 213; B41J2/01 501; B41M3/00 Z; B41M5/00 100; B41M5/00 120; B44C1/17 N; C09D11/101; C09D11/30; C09D11/38; G02B5/26; G02B5/28

According to International Patent Classification (IPC) or to both national classification and IPC

**B. FIELDS SEARCHED**

Minimum documentation searched (classification system followed by classification symbols)

B05D1/00-7/26; B41J2/01; B41M3/00; B41M5/00; B44C1/17; C09D11/00-13/00; G02B5/20-5/30

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | JP 2020-60627 A (FUJIFILM CORPORATION) 16 April 2020 (2020-04-16) paragraphs [0001], [0011]-[0013], [0015]-[0218], fig. 1-6 | 1-6, 11 |
| Y | | 7-10 |
| Y | WO 2020/194831 A1 (FUJIFILM CORPORATION) 01 October 2020 (2020-10-01) paragraphs [0001], [0009], [0010], [0061]-[0065], [0068]-[0070], [0074]-[0077], [0082]-[0089] | 7-10 |
| Y | JP 10-315511 A (SEIKO EPSON CORPORATION) 02 December 1998 (1998-12-02) paragraphs [0005]-[0016], [0033]-[0038], [0041]-[0043] | 8, 10 |
| Y | JP 2003-160750 A (SEIKO EPSON CORPORATION) 06 June 2003 (2003-06-06) paragraphs [0011], [0071]-[0073], [0079]-[0081] | 8, 10 |

☑ Further documents are listed in the continuation of Box C. ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **10 July 2023** | **25 July 2023** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (January 2015)

**INTERNATIONAL SEARCH REPORT**

International application No.
**PCT/JP2023/019818**

**C. DOCUMENTS CONSIDERED TO BE RELEVANT**

| Category* | Citation of document, with indication, where appropriate, of the relevant passages | Relevant to claim No. |
|---|---|---|
| Y | JP 2004-276397 A (SEIKO EPSON CORPORATION) 07 October 2004 (2004-10-07) paragraphs [0053]-[0060] | 8, 10 |
| Y | JP 2006-224535 A (FUJI PHOTO FILM COMPANY, LIMITED) 31 August 2006 (2006-08-31) paragraphs [0058], [0165], fig. 18 | 9-10 |
| Y | JP 2012-51187 A (CANON INCORPORATED) 15 March 2012 (2012-03-15) paragraphs [0073]-[0078], fig. 11 | 9-10 |
| Y | US 2020/0276854 A1 (JOHNSON MATTHEY PUBLIC LIMITED COMPANY) 03 September 2020 (2020-09-03) paragraph [0012] | 9-10 |

Form PCT/ISA/210 (second sheet) (January 2015)

**INTERNATIONAL SEARCH REPORT**
**Information on patent family members**

International application No.
**PCT/JP2023/019818**

| Patent document cited in search report | Publication date (day/month/year) | Patent family member(s) | Publication date (day/month/year) |
|---|---|---|---|
| JP 2020-60627 A | 16 April 2020 | JP 7058204 B2 | |
| WO 2020/194831 A1 | 01 October 2020 | US 2021/0403742 A1<br>paragraphs [0002], [0026]-[0028], [0082]-[0088], [0100]-[0104], [0075]-[0077], [0109]-[0117]<br>EP 3950857 A1<br>CN 113597453 A<br>JP 7282873 B2 | |
| JP 10-315511 A | 02 December 1998 | (Family: none) | |
| JP 2003-160750 A | 06 June 2003 | US 2003/0116055 A1<br>paragraphs [0021], [0112]-[0115], [0121]-[0123]<br>US 6824262 B2<br>JP 4448649 B2 | |
| JP 2004-276397 A | 07 October 2004 | JP 4228733 B2 | |
| JP 2006-224535 A | 31 August 2006 | US 2006/0187254 A1<br>paragraphs [0060], [0189], fig. 18<br>US 7306311 B2<br>JP 4045509 B2 | |
| JP 2012-51187 A | 15 March 2012 | US 2012/0050362 A1<br>paragraphs [0100]-[0106], fig. 11<br>US 8888204 B2<br>JP 5539117 B2 | |
| US 2020/0276854 A1 | 03 September 2020 | WO 2018/134572 A1<br>EP 3571058 A1<br>GB 2560613 A<br>GB 2560613 B | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2016114661 A
- WO 2020194831 A
- US 4683327 A
- US 5622648 A
- US 5770107 A
- WO 9522586 A
- WO 9524455 A
- WO 9700600 A
- WO 9823580 A
- WO 9852905 A
- JP 1272551 A
- JP H1272551 A
- JP 6016616 A
- JP H616616 A
- JP 7110469 A
- JP H7110469 A
- JP 11080081 A
- JP H1180081 A
- JP 2001328973 A
- WO 2017169696 A
- WO 2019181247 A
- JP 57165480 A
- JP S57165480 A
- JP 2002302487 A
- JP 2002080478 A
- JP 2002080851 A
- JP 2002179668 A
- JP 2002179670 A
- JP 2002338575 A
- JP 2002180051 A
- JP 62081354 A
- WO 2002006195 A
- JP 2011241215 A
- JP 2003287623 A
- JP 2014034581 A
- US 2367661 A
- US 2367670 A
- US 2448828 A
- US 2722512 A
- US 3046127 A
- US 2951758 A
- US 3549367 A
- JP 60105667 A
- JP S60105667 A
- US 4239850 A
- US 4212970 A
- WO 2011162291 A
- JP 2012211306 A
- JP 2013047204 A
- WO 2016009648 A
- WO 2016092844 A
- JP 4592225 B
- JP 60132767 A
- JP S60132767 A
- JP 2011184488 A
- JP 2022099947 A
- JP 2023034111 A


### Non-patent literature cited in the description


- Polyurethane Handbook. Nikkan Kogyo Shimbun, Ltd., 1987
- *Makromol. Chem.*, 1989, vol. 190, 2255
- *Advanced Materials*, 1993, vol. 5, 107
- Chiral Agent for TN and STN. Liquid Crystal Device Handbook. 1989, 199